# EUROPEAN PATENT APPLICATION

(11) **EP 4 207 825 A1**
(43) Date of publication of application: **05.07.2023**
(21) Application number: 21873913.4
(22) Date of filing: 07.06.2021
(51) Int. Cl.: H04W 4/16

(54) **CALLING METHOD, APPARATUS, AND SYSTEM**

(30) Priority: 30.09.2020 CN 202011066366
(71) Applicant: Huawei Technologies Co., Ltd., Shenzhen, Guangdong 518129 (CN)
(72) Inventor: CHANG, Lijuan, Shenzhen, Guangdong 518129 (CN); MENG, Bin, Shenzhen, Guangdong 518129 (CN); ZHANG, Yuanyuan, Shenzhen, Guangdong 518129 (CN); HAO, Hongxia, Shenzhen, Guangdong 518129 (CN)
(74) Representative: Huawei European IPR
(86) International application number: PCT/CN2021/098677
(87) International publication number: WO 2022/068251

(57) **Abstract**

A call method includes: A first CSCF device receives a first communication message including first call signaling, where an originating party/calling party or a terminating party/called party of the first call signaling is roaming-in user equipment of the first CSCF device; and the first CSCF device enables, based on the first communication message, the first call signaling to be routed to an AS in the roaming area of the roaming-in user equipment, where the AS in the roaming area is an AS that is capable of providing a value-added-to-call service for user equipment and that is in a home area of the first CSCF device. This method can improve resource utilization of the AS in the roaming area, and improve service experience of a roaming user.

## Description

This application claims priority to Chinese Patent Application No. 202011066366.0, filed with the China National Intellectual Property Administration on September 30, 2020 and entitled "CALL METHOD, APPARATUS, AND SYSTEM", which is incorporated herein by reference in its entirety.

### TECHNICAL FIELD

Embodiments of this application relate to the field of communication technologies, and in particular, to a call method, an apparatus, and a system.

### BACKGROUND

In an internet protocol (internet protocol, IP) multimedia subsystem (IP multimedia subsystem, IMS) network, user equipment may move from a home area of the user equipment to another area (which may be referred to as a roaming area). If the user equipment initiates call signaling in the roaming area, a session control function device that is in the roaming area and that receives a related call message may enable the call message to be routed to the home area of the user equipment, to trigger an application server (application server, AS) in the home area to provide a call value-added service, for example, a customized ring back tone service, an advertisement video service, or a short message service, for the user equipment, and then enables the call message to be routed to called user equipment.

In this way, an end-to-end delay between the user equipment in a roaming state and the AS in the home area is high, and user experience of the value-added-to-call service is reduced. For example, video freezing may occur in a process of watching a customized ring back tone advertisement video.

### SUMMARY

Embodiments of this application provide a call method, an apparatus, and a system, to resolve a problem that an end-to-end delay between user equipment roaming outside a home area and an AS in the home area of the user equipment is high, and network resource utilization of the AS is low.

To achieve the foregoing objective, the following technical solutions are used in embodiments of this application.

According to a first aspect, an embodiment of this application provides a call method. The call method is performed by a first call session control function CSCF device, and the method includes: receiving a first communication message including first call signaling, and an originating party or a terminating party of the first call signaling is roaming-in user equipment of the first CSCF device; and enabling, based on the first communication message, the first call signaling to be routed to an AS in a roaming area of the roaming-in user equipment, where the AS in the roaming area is an AS that is capable of providing a value-added-to-call service for user equipment and that is in a home area of the first CSCF device, so that the AS in the roaming area provides the value-added-to-call service for the roaming-in user equipment.

Based on the method according to the first aspect, when a calling party or a called party is roaming-in user equipment of the first CSCF device, the call signaling is routed to the AS in the roaming area of the roaming-in user equipment, and the AS in the roaming area of the roaming-in user equipment provides the value-added-to-call service for the roaming-in user equipment. Because user equipment roaming outside a home area of the user equipment is close to an AS in a roaming area of the user equipment, the AS in the roaming area of the roaming-in user equipment provides the value-added-to-call service for the user equipment, the roaming-in user equipment is close to the AS in the roaming area of the roaming-in user equipment, and an end-to-end delay between the roaming-in user equipment and the AS in the roaming area of the roaming-in user equipment is low, so that user experience is improved. In addition, in the call method provided in this embodiment of this application, the application server can provide the value-added-to-call service for a local calling party, and can further provide the value-added-to-call service for roaming-in user equipment that roams to the home area, so that an opportunity for the AS to serve a calling party is increased and network resource utilization is improved.

In a possible design, the enabling, based on the first communication message, the first call signaling to be routed to an application server AS in a roaming area of the roaming-in user equipment includes: determining, based on the first communication message, that the originating party or the terminating party of the first call signaling is roaming-in user equipment of the first CSCF device; and enabling the first call signaling to be routed to the AS in the roaming area in response to the first call signaling.

Based on the possible design, the call signaling may be routed to the AS in the roaming area, and the AS in the roaming area is triggered to provide the value-added-to-call service for the roaming-in user equipment. Because the user equipment is close to the AS in the roaming area, an end-to-end delay between the user equipment and the AS in the roaming area is low, so that user experience can be improved and network resource utilization of the AS can be improved.

In a possible design, the enabling the first call signaling to be routed to the AS in the roaming area includes: sending a second communication message to a second CSCF device in the home area of the first CSCF device or the AS in the roaming area, where the second communication message includes the first call signaling and first indication information, and the first indication information indicates that the originating party or the terminating party of the first call signaling is roaming-in user equipment of the first CSCF device.

Based on this possible design, the first CSCF device may directly send the second communication message to the AS in the roaming area, or may send the second communication message to the AS in the roaming area through the second CSCF device. This effectively and flexibly designs a manner of sending the second communication message, and simplifies a system design.

In a possible design, the first indication information further indicates the first call signaling or second call signaling of a call service corresponding to the first call signaling to be routed to an AS in the roaming area of the roaming-in user equipment.

Based on the possible design, the first indication information is provided with a function of indicating to enable the call signaling to be routed to the AS in the roaming area, and a device on a call signaling transmission route enables the call signaling to be routed to the AS in the roaming area based on the first indication information, so that the system design is simplified.

In a possible design, the method further includes: storing a correspondence between the first indication information and the call service corresponding to the first call signaling or a correspondence between the first indication information and a communication session corresponding to the first call signaling.

Based on the possible design, the correspondence between the first indication information and the call service corresponding to the first call signaling or the correspondence between the first indication information and the communication session corresponding to the first call signaling may be stored, so that after receiving the call signaling again, the device on the call signaling transmission route enables the call signaling to be routed to the AS in the roaming area based on the first indication information in the correspondence and the call route designed in this embodiment of this application, to trigger the AS in the roaming area to provide the call value-added service.

In a possible design, the second communication message further includes address information of the second CSCF device, to enable the second communication message to be routed to the second CSCF device.

Based on this possible design, the communication message that carries the call signaling may be routed to the AS in the roaming area through the second CSCF device based on the address information of the second CSCF device, so that the system design is simplified.

In a possible design, the determining, based on the first communication message, that an originating party or a terminating party of the first call signaling is roaming-in user equipment of the first CSCF device includes: determining, based on a "from" header field or a PAI header field in the first communication message, that the originating party of the first call signaling is roaming-in user equipment of the first CSCF device; or determining, based on a "to" header field in the first communication message, that the terminating party of the first call signaling is roaming-in user equipment of the first CSCF device.

Based on this possible design, it may be determined, based on information carried in the header field of the communication message, that the originating party or the terminating party of the call signaling is roaming-in user equipment, so that the system design is simplified.

In a possible design, the method further includes: receiving a third communication message sent by the AS in the roaming area, where the third communication message includes the first call signaling, the first indication information, and second indication information, where the second indication information indicates that the AS in the roaming area is to provide a value-added-to-call service for the roaming-in user equipment, or where the second indication information indicates that the AS in the roaming area has provided the value-added-to-call service for the roaming-in user equipment; and sending a fourth communication message to a third CSCF device in a home area of the roaming-in user equipment, where the fourth communication message includes the first call signaling, the first indication information, and the second indication information.

Based on this possible design, the communication message sent by the AS in the roaming area may be routed to the home area of the roaming-in user equipment, for example, an AS in the home area, so that the AS in the home area performs service conflict processing based on content carried in the communication message, so as to avoid a service conflict problem caused when the AS in the home area and the AS in the roaming area simultaneously provide the value-added-to-call service for the roaming-in user equipment.

In a possible design, the method further includes: receiving a fifth communication message from the third CSCF device in the home area of the roaming-in user equipment, where the fifth communication message includes the first indication information and third indication information, and the third indication information indicates that the AS in the home area of the roaming-in user equipment is to provide the value-added-to-call service for the roaming-in user equipment; and sending a sixth communication message to the AS in the roaming area based on the first indication information, where the sixth message includes the first indication information and the third indication information.

Based on this possible design, the communication message sent by the AS in the home area may be routed back to the AS in the roaming area of the roaming-in user equipment, so that the AS in the roaming area performs service conflict processing based on content carried in the communication message, so as to avoid a service conflict problem caused when the AS in the home area and the AS in the roaming area simultaneously provide the value-added-to-call service for the roaming-in user equipment.

In a possible design, the method further includes: receiving a fifth communication message from the third CSCF device in the home area of the roaming-in user equipment, where the fifth communication message includes the first indication information and the second indication information; and sending a sixth communication message to the AS in the roaming area based on the first indication information, where the sixth message includes the first indication information and the second indication information.

Based on this possible design, the communication message sent by the AS in the home area may be routed back to the AS in the roaming area of the roaming-in user equipment, so that the AS in the roaming area performs service conflict processing, so as to avoid a service conflict problem caused when the AS in the home area and the AS in the roaming area simultaneously provide the value-added-to-call service for the roaming-in user equipment.

In a possible design, before the enabling, based on the first communication message, the first call signaling to be routed to an AS in the roaming area, the method further includes: determining that the roaming-in user equipment is capable of using the value-added-to-call service provided by the AS in the home area of the first CSCF device.

Based on this possible design, before the call signaling is routed to the AS in the roaming area, whether the roaming-in user equipment supports the capability of using the value-added-to-call service provided by the AS in the home area of the first CSCF device may be determined. Only when the roaming-in user equipment has the capability, the call signaling is roamed to the AS, and the AS in the roaming area is triggered to provide the call value-added service, so as to avoid a problem that the value-added-to-call service cannot be presented because the user equipment is not capable of supporting the value-added-to-call service provided by the AS in the roaming area.

In a possible design, the second CSCF device in the home area of the first CSCF device is an interrogating-call session control function I-CSCF device or a serving-call session control function S-CSCF device in the home area of the first CSCF device. The first CSCF device is a proxy-call session control function P-CSCF device.

Based on this possible design, a device for implementing the call method in this embodiment of this application is effectively and flexibly designed.

According to a second aspect, an embodiment of this application provides a call method. The call method is performed by a second call session control function CSCF device, and the method includes: receiving a second communication message from a first call session control function CSCF device, where the second communication message includes first call signaling, and an originating party or a terminating party of the first call signaling is roaming-in user equipment of the first CSCF device; and enabling, based on the second communication message, the first call signaling to be routed to an application server AS in a roaming area of the roaming-in user equipment, where the AS in the roaming area is an AS that is capable of providing a value-added-to-call service for user equipment and that is in a home area of the first CSCF device.

Based on the method according to the second aspect, the call signaling is routed to the AS in the roaming area of the roaming-in user equipment, and the AS in the roaming area of the roaming-in user equipment provides the value-added-to-call service for the roaming-in user equipment. Because user equipment roaming outside a home area of the user equipment is close to an AS in the roaming area of the user equipment, the AS in the roaming area of the roaming-in user equipment provides the value-added-to-call service for the user equipment. Because the user equipment is close to the AS in the roaming area, an end-to-end delay between the user equipment and the AS in the roaming area of the user equipment is low, so that user experience can be improved. In addition, the application server can provide the value-added-to-call service for a local calling party, and can further provide the value-added-to-call service for roaming-in user equipment that roams to the home area, so that an opportunity for the AS to serve a calling party is increased and network resource utilization is improved.

In a possible design, the second communication message further includes first indication information, and the first indication information indicates that the originating party or the terminating party of the first call signaling is roaming-in user equipment of the first CSCF device; and the enabling, based on the second communication message, the first call signaling to be routed to an application server AS in a roaming area of the roaming-in user equipment includes: sending the second communication message to the AS in the roaming area based on the first indication information.

In a possible design, the first indication information further indicates the first call signaling or second call signaling of a call service corresponding to the first call signaling to be routed to an AS in the roaming area of the roaming-in user equipment.

In a possible design, the method further includes: storing a correspondence between the first indication information corresponding to the first call signaling and the call service or a correspondence between the first indication information and a communication session corresponding to the first call signaling.

In a possible design, the second communication message further includes address information of a second CSCF device, to enable the second communication message to be routed to the second CSCF device.

In a possible design, the method further includes: receiving a third communication message sent by the AS in the roaming area, where the third communication message includes the first call signaling, the first indication information, and second indication information, where the second indication information indicates that the AS in the roaming area is to provide a value-added-to-call service for the roaming-in user equipment, or where the second indication information indicates that the AS in the roaming area has provided the value-added-to-call service for the roaming-in user equipment; and sending a fourth communication message to a third CSCF device in a home area of the roaming-in user equipment, where the fourth communication message includes the first call signaling, the first indication information, and the second indication information.

In a possible design, the method further includes: receiving a fifth communication message from the third CSCF device in the home area of the roaming-in user equipment, where the fifth communication message includes the first indication information and third indication information, and the third indication information indicates that the AS in the home area of the roaming-in user equipment is to provide the value-added-to-call service for the roaming-in user equipment; and sending a sixth communication message to the AS in the roaming area based on the first indication information, where the sixth message includes the first indication information and the third indication information.

In a possible design, the method further includes: receiving a fifth communication message from the third CSCF device in the home area of the roaming-in user equipment, where the fifth communication message includes the first indication information and the second indication information; and sending a sixth communication message to the AS in the roaming area based on the first indication information, where the sixth message includes the first indication information and the second indication information.

In a possible design, the second CSCF device is an interrogating-call session control function I-CSCF device in the home area of the first CSCF device or a serving-call session control function S-CSCF device in a home area of the second CSCF device.

For related descriptions of the first indication information, the second communication message, and the second CSCF device, refer to the descriptions in the first aspect or the possible design of the first aspect. Details are not described again.

According to a third aspect, an embodiment of this application provides a call method. The call method is performed by a first AS, and the method includes: receiving a second communication message from a first call session control function CSCF device or a second CSCF device, where the second communication message includes first call signaling, and an originating party or a terminating party of the first call signaling is roaming-in user equipment of the first CSCF device or the second CSCF device; and providing a value-added-to-call service for the roaming-in user equipment based on the second communication message.

Based on the method according to the third aspect, an AS in the roaming area of the roaming-in user equipment provides the value-added-to-call service for the roaming-in user equipment. Because user equipment roaming outside a home area of the user equipment is close to the AS in the roaming area of the user equipment, the AS in the roaming area of the roaming-in user equipment provides the value-added-to-call service for the user equipment. Because the roaming-in user equipment is close to the AS in the roaming area, an end-to-end delay between the roaming-in user equipment and the AS in the roaming area of the roaming-in user equipment is low, so that user experience can be improved. In addition, in the call method provided in this embodiment of this application, the application server can provide the value-added-to-call service for a local calling party, and can further provide the value-added-to-call service for roaming-in user equipment that roams to the home area, so that an opportunity for the AS to serve a calling party is increased and network resource utilization is improved.

In a possible design, the second communication message further includes first indication information, and the first indication information indicates that the originating party or the terminating party of the first call signaling is roaming-in user equipment of the first CSCF device.

In a possible design, the first indication information further indicates the first call signaling or second call signaling of a call service corresponding to the first call signaling to be routed to the first AS.

In a possible design, the method further includes: storing a correspondence between the first indication information and the call service corresponding to the first call signaling or a correspondence between the first indication information and a communication session corresponding to the first call signaling.

In a possible design, the providing a value-added-to-call service for the roaming-in user equipment based on the second communication message includes: in response to the second communication message, providing the value-added-to-call service for the roaming-in user equipment; and sending a third communication message to the second CSCF device, where the third communication message includes the first call signaling, the first indication information, and second indication information, where the second indication information indicates that the first AS has provided the value-added-to-call service for the roaming-in user equipment.

In a possible design, the providing a value-added-to-call service for the roaming-in user equipment based on the second communication message includes: sending a third communication message to the second CSCF device in response to the second communication message, where the third communication message includes the first call signaling, the first indication information, and second indication information, where the second indication information indicates that the first AS is to provide the value-added-to-call service for the roaming-in user equipment; receiving a sixth communication message from the second CSCF device, where the sixth communication message includes the first call signaling, the first indication information, and third indication information, and the third indication information indicates that a home AS of the roaming-in user equipment is to provide the value-added-to-call service for the roaming-in user equipment; and providing the value-added-to-call service for the roaming-in user equipment in response to the sixth communication message.

For related descriptions of the first indication information, the second communication message, the second CSCF device, the third communication message, the fourth communication message, the fifth communication message, and the sixth communication message, refer to the descriptions in the first aspect or the possible design of the first aspect. Details are not described again.

According to a fourth aspect, an embodiment of this application provides a call method. The call method is performed by a second AS, and the method includes: receiving a seventh communication message from a third call session control function CSCF device, where the seventh communication message includes first call signaling, and an originating party or a terminating party of the first call signaling is home user equipment of the third CSCF device; and enabling, based on the seventh communication message, the first call signaling or second call signaling of a call service corresponding to the first call signaling to be routed to a first AS, where the first AS is an AS in a roaming area of the home user equipment.

Based on the method in the fourth aspect, an AS in the home area enables the call signaling to be routed to the AS in the roaming area, and the AS in the roaming area provides a value-added-to-call service for roaming-in user equipment. Because the user equipment roaming outside a home area of the user equipment is close to the AS in the roaming area of the user equipment, the AS in the roaming area of the roaming-in user equipment provides the value-added-to-call service for the user equipment. Because the roaming-in user equipment is close to the AS in the roaming area, an end-to-end delay between the roaming-in user equipment and the AS in the roaming area of the roaming-in user equipment is low, so that user experience is improved. In addition, in the call method provided in this embodiment of this application, the application server can provide the value-added-to-call service for a local calling party, and can further provide the value-added-to-call service for roaming-in user equipment that roams to the home area, so that an opportunity for the AS to serve a calling party is increased and network resource utilization is improved.

In a possible design, the seventh communication message further includes first indication information, the first indication information indicates that the originating party or the terminating party of the first call signaling is roaming-in user equipment of a first CSCF device, and the first CSCF device is a CSCF device in the roaming area of the home user equipment.

In a possible design, the first indication information further indicates the first call signaling or second call signaling of a call service corresponding to the first call signaling to be routed to an AS in the roaming area of the home user equipment.

In a possible design, the method further includes: storing a correspondence between the first indication information and the call service or a correspondence between the first indication information and a communication session corresponding to the first call signaling.

In a possible design, the enabling, based on the seventh communication message, the first call signaling to be routed to a first AS includes: sending an eighth communication message to the third CSCF device in response to the seventh communication message, where the eighth communication message includes the first call signaling, the first indication information, and third indication information, and the third indication information indicates that the second AS is to provide the value-added-to-call service for the roaming-in user equipment.

In a possible design, the enabling, based on the seventh communication message, the first call signaling to be routed to a first AS includes: sending an eighth communication message to the third CSCF device in response to the seventh communication message, where the eighth communication message includes the first call signaling and the first indication information.

For related descriptions of the first indication information and the second communication message, refer to the descriptions in the first aspect or the possible design of the first aspect. Details are not described again.

According to a fifth aspect, this application provides a communication apparatus. The communication apparatus may be a functional module or a physical entity that implements any one of the first aspect or the possible designs of the first aspect, or a functional module or a physical entity that implements any one of the second aspect or the possible designs of the second aspect, or a functional module or a physical entity that implements any one of the third aspect or the possible designs of the third aspect, or a functional module or a physical entity that implements any one of the fourth aspect or the possible designs of the fourth aspect. The communication apparatus may be implemented by hardware, or may be implemented by hardware executing corresponding software. The hardware or the software includes one or more modules corresponding to the foregoing functions. In a design, the communication apparatus may include modules or means (means) that correspond one-to-one to the method/operations/steps/actions described in the first aspect. The modules, units, or means may be implemented by hardware, software, or hardware executing corresponding software. The hardware or the software includes one or more modules or units corresponding to the foregoing functions. For example, the communication apparatus may include a receiving unit and a processing unit.

In a first possible design, the communication apparatus may be a functional module or a physical entity that implements any one of the first aspect or the possible designs of the first aspect. The receiving unit is configured to receive a first communication message including first call signaling, where an originating party or a terminating party of the first call signaling is roaming-in user equipment of a first CSCF device. The processing unit is configured to route, based on the first communication message, the first call signaling to an application server AS in a roaming area of the roaming-in user equipment, where the AS in the roaming area is an AS that is capable of providing a value-added-to-call service for user equipment and that is in a home area of the first CSCF device, so that the AS in the roaming area provides the value-added-to-call service for the roaming-in user equipment.

For related descriptions of the first indication information and the second communication message, refer to the descriptions in the first aspect or the possible design of the first aspect. Details are not described again.

For a specific implementation of the communication apparatus, refer to behavior functions of the first CSCF device in the call method provided in any one of the first aspect or the possible designs of the first aspect. Details are not described herein again. Therefore, the provided communication apparatus can achieve beneficial effects the same as those of any one of the first aspect or the possible designs of the first aspect.

In a second possible design, the communication apparatus may be a functional module or a physical entity that implements any one of the second aspect or the possible designs of the second aspect. The receiving unit is configured to receive a second communication message from a first call session control function CSCF device, where the second communication message includes first call signaling, and an originating party or a terminating party of the first call signaling is roaming-in user equipment of the first CSCF device. The processing unit is configured to route, based on the second communication message, the first call signaling to an application server AS in a roaming area of the roaming-in user equipment, where the AS in the roaming area is an AS that is capable of providing a value-added-to-call service for user equipment and that is in a home area of the first CSCF device.

For related descriptions of the first indication information and the second communication message, refer to the descriptions in the first aspect or the possible design of the first aspect. Details are not described again.

For a specific implementation of the communication apparatus, refer to behavior functions of the second CSCF device in the call method provided in any one of the second aspect or the possible designs of the second aspect. Details are not described herein again. Therefore, the provided communication apparatus can achieve beneficial effects the same as those of any one of the second aspect or the possible designs of the second aspect.

In a third possible design, the communication apparatus may be a functional module or a physical entity that implements any one of the third aspect or the possible designs of the third aspect. The receiving unit is configured to receive a second communication message from a first call session control function CSCF device or a second CSCF device, where the second communication message includes first call signaling, and an originating party or a terminating party of the first call signaling is roaming-in user equipment of the first CSCF device or the second CSCF device. The processing unit is configured to provide a value-added-to-call service for the roaming-in user equipment based on the second communication message.

For related descriptions of the first indication information and the second communication message, refer to the descriptions in the first aspect or the possible design of the first aspect. Details are not described again.

For a specific implementation of the communication apparatus, refer to behavior functions of the first AS in the call method provided in any one of the third aspect or the possible designs of the third aspect. Details are not described herein again. Therefore, the provided communication apparatus can achieve beneficial effects the same as those of any one of the third aspect or the possible designs of the third aspect.

In a fourth possible design, the communication apparatus may be a functional module or a physical entity that implements any one of the fourth aspect or the possible designs of the fourth aspect. The receiving unit is configured to receive a seventh communication message from a third call session control function CSCF device, where the seventh communication message includes first call signaling, and an originating party or a terminating party of the first call signaling is home user equipment of the third CSCF device. The processing unit is configured to route, based on the seventh communication message, the first call signaling or second call signaling of a call service corresponding to the first call signaling to a first AS, where the first AS is an AS in a roaming area of the home user equipment.

For related descriptions of the first indication information and the second communication message, refer to the descriptions in the first aspect or the possible design of the first aspect. Details are not described again.

For a specific implementation of the communication apparatus, refer to behavior functions of the second AS in the call method provided in any one of the fourth aspect or the possible designs of the fourth aspect. Details are not described herein again. Therefore, the provided communication apparatus can achieve beneficial effects the same as those of any one of the fourth aspect or the possible designs of the fourth aspect.

According to a sixth aspect, a communication apparatus is provided. The communication apparatus may be a first CSCF device, a chip or a system on chip in the first CSCF device, or another module or unit that can implement the method on a first CSCF device side. The communication apparatus may implement functions performed by the first CSCF device in the first aspect or the possible designs of the first aspect, and the functions may be implemented by hardware. In a possible design, the communication apparatus may include a processor and a communication interface, where the processor is configured to: receive, through the communication interface, a first communication message including first call signaling, where an originating party or a terminating party of the first call signaling is roaming-in user equipment of a first CSCF device; and route, based on the first communication message, the first call signaling to an AS in the roaming area of the roaming-in user equipment, where the AS in the roaming area is an AS that is capable of providing a value-added-to-call service for user equipment and that is in a home area of the first CSCF device, so that the AS in the roaming area provides the value-added-to-call service for the roaming-in user equipment.

In another possible design, the communication apparatus in the sixth aspect may be a second CSCF device, a chip or a system on chip in the second CSCF device, a module or a unit that is in the second CSCF device and that is configured to implement the call method in embodiments of this application, or another module or unit that can implement the method performed by the second CSCF device. For example, the communication apparatus may include a processor and a communication interface. The processor and the communication interface that are included in the communication apparatus are configured to support the communication apparatus in implementing the functions performed by the second CSCF device in the second aspect or the possible designs of the second aspect.

In another possible design, the communication apparatus in the sixth aspect may be a first AS, a chip or a system on chip in the first AS, a module or unit that is in the first AS and that is configured to implement the call method in embodiments of this application, or another module or unit that can implement the method performed by the first AS. For example, the communication apparatus may include a processor and a communication interface. The processor and the communication interface that are included in the communication apparatus are configured to support the communication apparatus in implementing the functions performed by the first AS in the third aspect or the possible designs of the third aspect, or implementing the functions performed by the first AS in the third aspect or the possible designs of the third aspect.

In another possible design, the communication apparatus in the sixth aspect may be a second AS, a chip or a system on chip in the second AS, a module or unit that is in the second AS and that is configured to implement the call method in embodiments of this application, or another module or unit that can implement the method performed by the second AS. For example, the communication apparatus may include a processor and a communication interface. The processor and the communication interface that are included in the communication apparatus are configured to support the communication apparatus in implementing the functions performed by the second AS in the fourth aspect or the possible designs of the fourth aspect, or implementing the functions performed by the second AS in the fourth aspect or the possible designs of the fourth aspect.

In another possible design, the communication apparatus in the sixth aspect may further include a memory, and the memory is configured to store computer instructions and/or data. When the communication apparatus runs, the processor executes the computer instructions stored in the memory, so that the communication apparatus performs the call method according to any one of the first aspect or the possible designs of the first aspect; or performs the call method according to any one of the second aspect or the possible designs of the second aspect; or performs the call method according to any one of the third aspect or the possible designs of the third aspect; or performs the call method according to any one of the fourth aspect or the possible designs of the fourth aspect. In embodiments of this application, the communication interface may be a transceiver, an interface circuit, a bus interface, a pin, or another apparatus that can implement a transceiver function.

According to a seventh aspect, a computer-readable storage medium is provided. The computer-readable storage medium stores instructions. When the instructions are run on a computer, the computer is enabled to perform the call method according to any one of the first aspect or the possible designs of the first aspect; or configured to perform the call method according to any one of the second aspect or the possible designs of the second aspect; or configured to perform the call method according to any one of the third aspect or the possible designs of the third aspect; or configured to perform the call method according to any one of the fourth aspect or the possible designs of the fourth aspect.

According to an eighth aspect, a computer program product including instructions is provided. The computer program product may include program instructions. When the computer program product is run on a computer, the computer is enabled to perform the call method according to any one of the first aspect or the possible designs of the first aspect; or configured to perform the call method according to any one of the second aspect or the possible designs of the second aspect; or configured to perform the call method according to any one of the third aspect or the possible designs of the third aspect; or configured to perform the call method according to any one of the fourth aspect or the possible designs of the fourth aspect.

According to a ninth aspect, a chip system is provided. The chip system includes a processor and a communication interface. The chip system may be configured to implement a function performed by the first CSCF device in the first aspect or the possible designs of the first aspect, or the chip system may implement a function performed by the second CSCF device in the second aspect or the possible designs of the second aspect, or implement a function performed by the first AS in the third aspect or the possible designs of the third aspect, or implement a function performed by the second AS in the fourth aspect or the possible designs of the fourth aspect.

According to a tenth aspect, an embodiment of this application further provides a communication system, where the communication system includes the communication apparatus according to the fifth aspect or the sixth aspect.

### BRIEF DESCRIPTION OF DRAWINGS

FIG. 1a is a first schematic diagram in which a roaming user accesses an IMS network in a home area;
FIG. 1b is a second schematic diagram in which a roaming user accesses an IMS network in a home area;
FIG. 2 is a schematic diagram in which a roaming user uses a value-added-to-call service in a home area;
FIG. 3 is a schematic diagram of a communication network architecture according to an embodiment of this application;
FIG. 4 is a first flowchart of a call method according to an embodiment of this application;
FIG. 5A and FIG. 5B are a second flowchart of a call method according to an embodiment of this application;
FIG. 6 is a flowchart in which a calling party uses a value-added-to-call service in a roaming area according to an embodiment of this application;
FIG. 7 is a flowchart in which a called party uses a value-added-to-call service in a roaming area according to an embodiment of this application;
FIG. 8A and FIG. 8B are a third flowchart of a call method according to an embodiment of this application;
FIG. 9A and FIG. 9B are a fourth flowchart of a call method according to an embodiment of this application;
FIG. 10 is a schematic diagram of a structure of an apparatus 100 according to an embodiment of this application;
FIG. 11 is a schematic diagram of a structure of an apparatus 110 according to an embodiment of this application;
FIG. 12 is a schematic diagram of a structure of an apparatus 120 according to an embodiment of this application;
FIG. 13 is a schematic diagram of a structure of an apparatus 130 according to an embodiment of this application; and
FIG. 14 is a schematic diagram of a structure of an apparatus 140 according to an embodiment of this application.

### DESCRIPTION OF EMBODIMENTS

Before embodiments of this application are described, related technical terms in embodiments of this application are explained. It should be noted that, the explanations are intended to facilitate understanding of embodiments of this application, but should not be considered as limitations on the protection scope required by embodiments of this application.

An IMS network is a network architecture that provides voice and multimedia services according to the internet protocol (internet protocol, IP). The IMS network can satisfy requirements of current terminal customers for more innovative and diversified multimedia services. The IMS network has the following features: The session initiation protocol (session initiation protocol, SIP) is used as a call control protocol. According to SIP, call control and service control are separated, and a multimedia support capability is enhanced. Home control enables user equipment roaming outside can still use a service the same as that in a home area.

Roaming means that user equipment moves from a registration area/home area of the user equipment to another area outside the registration area/home area. A network area outside the registration area/home area of the user equipment may be referred to as a roaming area, a visited area, a roaming location, or a visited location of the user equipment, where a communication network is referred to as a visited public land mobile network (public land mobile network, PLMN) (VPLMN for short). In embodiments of this application, a home area of user equipment may be referred to as a home location, and a communication network of the home area of the user equipment may be referred to as a home public land mobile network (home public land mobile network, HPLMN) (HPLMN for short) of the user equipment.

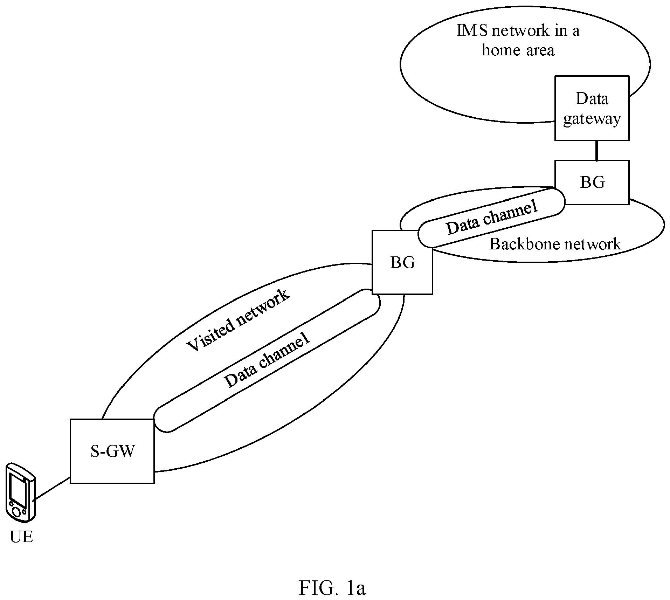

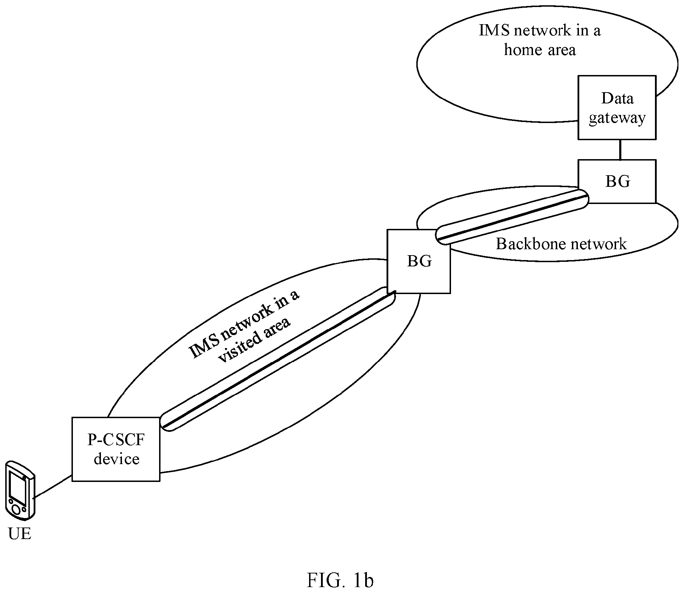

User equipment in a roaming area may access an IMS network in a home area of the user equipment in a manner shown in FIG. 1a or a manner shown in FIG. 1b, and use a value-added-to-call service provided by the IMS network in the home area. Refer to FIG. 1a. A roaming area provides a data channel including a data gateway and a border gateway (border gateway, BG). User equipment may interwork with a data gateway (for example, a packet data network (packet data network, PDN) gateway (PDN gateway, P-GW)) in a home area through the data channel, access an IMS network in the home area through the data gateway in the home area, and use a value-added-to-call service in the home area. Refer to FIG. 1b. A proxy-call session control function (proxy-call session control function, P-CSCF) device in a roaming area interworks with an IMS network in a home area. User equipment may access the home area of the user equipment through the P-CSCF device in the roaming area, and use a value-added-to-call service in the home area.

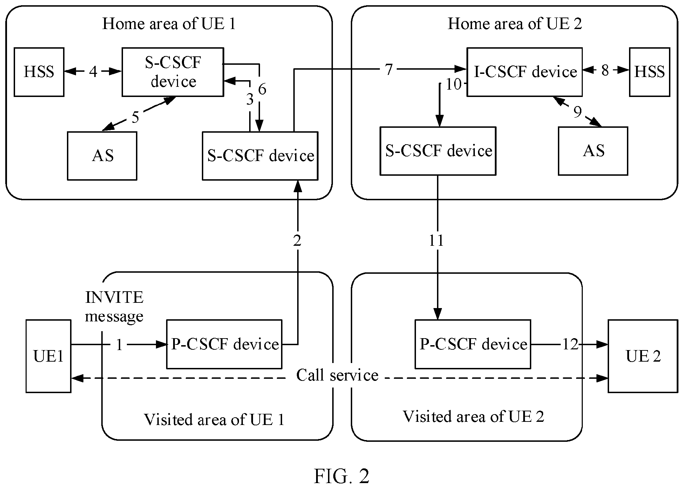

In a conventional technology, user equipment initiates a call request in a roaming area of the user equipment, but the sent call request may be routed to an IMS network in a home area of the user equipment in the manner shown in FIG. 1a or FIG. 1b. The IMS network in the home area of the user equipment provides a value-added-to-call service for the user equipment, and an IMS in the roaming area cannot provide the value-added-to-call service for the roaming-in user equipment. For example, FIG. 2 is a schematic flowchart in which user equipment UE 1 calls user equipment UE 2. After the UE 1 sends an INVITE message to a P-CSCF device in a roaming area, the P-CSCF device in the roaming area enables the INVITE message to be routed to an I-CSCF device/S-CSCF device in a home area of the UE 1, and the I-CSCF device/S-CSCF device in the home area of the UE 1 enables the INVITE message to be routed to an IMS network in the home area of the UE 1. An AS in the home area of the UE 1 is triggered to provide a value-added-to-call service for the UE 1, and the INVITE message is further routed to the UE 2 for a call connection.

In the call manner shown in FIG. 2, the user equipment UE 1 roaming outside the home area can only use the value-added-to-call service provided by the home location application server (application server, AS) of the UE 1. Because the UE 1 roaming outside the home area is far away from the AS in the home area of the UE 1, an end-to-end delay between the UE 1 and the AS in the home area is high, and user experience is reduced. In addition, in the call manner shown in FIG. 2, the AS in the home area of the UE 1 can provide the value-added-to-call service only for local UE, but cannot provide the value-added-to-call service for roaming-in UE that roams to the home area. Consequently, opportunities for the AS to serve UE are reduced and network resource utilization is reduced.

To resolve the foregoing technical problem, embodiments of this application provide a call method, including: receiving, by A first CSCF device receives a first communication message including first call signaling, where an originating party or a calling party of the first call signaling is roaming-in user equipment of the first CSCF device; and the first CSCF device enables, based on the first communication message, the first call signaling to be routed to an AS in the roaming area of the roaming-in user equipment, where the AS in the roaming area is an AS that is capable providing a value-added-to-call service for user equipment and that is in a home area of the first CSCF device. In this way, the AS in the roaming area of the roaming-in user equipment may provide the value-added-to-call service for the roaming-in user equipment, so that the roaming-in user equipment uses the value-added-to-call service in a roaming area. Because user equipment roaming outside a home area is close to an AS in the roaming area in a roaming area of the user equipment, the AS in the roaming area of the user equipment provides the value-added-to-call service for the user equipment. Because the roaming-in user equipment is close to the AS in the roaming area, an end-to-end delay between the user equipment and the AS in the roaming area is low, and user experience can be improved. In addition, in the call method provided in embodiments of this application, the application server can provide the value-added-to-call service for local user equipment, and can further provide the value-added-to-call service for roaming-in user equipment that roams to the home area, so that an opportunity for the AS to serve user equipment is increased and network resource utilization is improved.

In embodiments of this application, the roaming-in user equipment may be user equipment, and the user equipment is user equipment that roams from a home area (for example, an HPLMN) of the user equipment to an area (for example, another PLMN) outside the home area of the user equipment. From a perspective of the user equipment, the area outside the home area may be referred to as a roaming area, a visited area, an HPLMN, or a roaming location of the user equipment. From a perspective of a device (for example, a P-CSCF device, an AS, or a packet data gateway (packet gateway, PGW)) in the area outside the home area, the user equipment may be referred to as roaming-in user equipment of the device in the area outside the home area. From a perspective of a device in the home area (for example, an HPLMN) of the user equipment, the user equipment may be referred to as "roaming-out" user equipment. For example, it is assumed that a home area of UE 1 is an area 1. If the UE 1 roams to an area 2, and the area 2 is different from the area 1, from a perspective of the UE 1, the area 1 may be referred to as the home area of the UE 1, and the area 2 may be referred to as a roaming area, a roaming location, or a visited location of the UE 1; from a perspective of a P-CSCF in the area 2, the UE 1 may be referred to as roaming-in user equipment of the P-CSCF device.

In embodiments of this application, the AS in the roaming area may be an AS in the roaming area of the roaming-in user equipment, and the AS in the home area may be an AS in the home area of the roaming-in user equipment.

In embodiments of this application, the value-added-to-call service is a supplementary service that is provided by an application server in a context (including before talking, during talking, or after talking) of a call service for user equipment (which may be a calling party or a called party) participating in the call service and that is in addition to the call service. Specifically, the supplementary service may be used or consumed by a call service application (Application, APP, for example, a telephony communication application, telephony APP) on the user equipment, or may be used or consumed by an application (for example, an external application or a nested application) associated with the call service application of the user equipment. Specifically, the supplementary service may include but is not limited to a media-type service and a message service. If the supplementary service is a media-type service, the application server may trigger, based on call signaling, the call service application on the user equipment to present media content, where the media content may be game content, customized ring back tone content, calling line identification presentation content, or the like. If the supplementary service is a message service, the application server may send a video notification, a short message notification (for example, a 5th generation (5th generation, 5G) message), or the like to the user equipment based on call signaling.

In embodiments of this application, a format of the media content may include but is not limited to video content, audio content, a hypertext markup language (hypertext markup language, HTML) page, a joint photographic experts group (joint photographic experts group, JPEG) picture, and a graphics interchange format (graphics interchange format, GIF) animation. If the format is audio content, the foregoing presenting media content is playing audio content on the user equipment. If the format is video content, an HTML page, a JPEG picture, a GIF animation, or the like, the foregoing presenting media content is rendering (render) or displaying (display) video content, an HTML page, a JPEG picture, a GIF animation, or the like on the user equipment.

In embodiments of this application, the call service may be a voice call service or a video call service that is performed by the user equipment as a calling party or a called party and that is connected to another call device (for example, the foregoing called party) through a communication network. For example, the call service may be a voice call service or a video service performed by the user equipment by dialing a mobile phone number, an office fixed-line phone number, or a client service center number. For another example, the call service may be a voice call service or a video service performed by the user equipment by receiving a call from a mobile phone, an office fixed-line phone number, or a client service center.

For example, UE 1 calls UE 2, and an AS provides a value-added-to-call service for the UE 1. If the UE 1 dials a mobile phone number of the UE 2, when or before a call request arrives at the UE 2, the AS may trigger the UE 1 to present media content, game content, or the like on an APP interface related to the call service. In a phase in which the call request arrives at the UE 2, the UE 2 rings, and the UE 2 hooks off, the AS may trigger the UE 1 to present media content, game content, or the like on an APP interface related to the call service. Alternatively, in a phase in which the UE 2 hooks off and the UE 1 and the UE 2 enter a session, the AS may trigger the UE 1 to provide media content, game content, or the like on an APP interface related to the call service.

The following describes the call method provided in embodiments of this application with reference to the accompanying drawings.

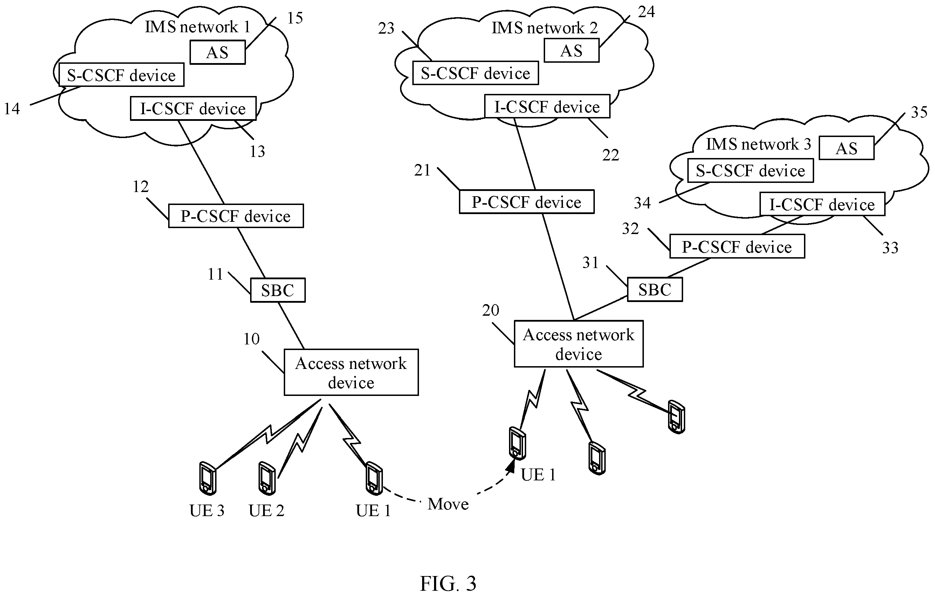

The call method provided in embodiments of this application may be performed by a network architecture shown in FIG. 3. As shown in FIG. 3, the network architecture may include user equipment (user equipment, UE) and a plurality of IMS networks. The plurality of IMS networks may include an IMS network with which the user equipment registers. Each IMS network may include a P-CSCF device, an interrogating-call session control function (interrogating-call session control function, I-CSCF) device, a serving-call session control function (serving-call session control function, S-CSCF) device, and an AS, and may further include an access network device, a session border controller (session border controller, SBC), a home subscriber server (home subscriber server, HSS), and another device. This is not limited. For example, the network architecture shown in FIG. 3 includes a plurality of UEs such as UE 1, UE 2, and UE 3, an access network device 10, an SBC 11, a P-CSCF device 12, an access network device 20, a P-CSCF device 21, an SBC 31, an IMS network 1, an IMS network 2, and an IMS network 3. The IMS network 1 includes an I-CSCF device 13, an S-CSCF device 14, and an AS 15. The IMS network 2 includes an I-CSCF device 22, an S-CSCF device 23, and an AS 24. The IMS network 3 includes an I-CSCF device 33, an S-CSCF device 34, and an AS 35.

The call method provided in embodiments of this application may be applied to various communication scenarios, for example, one or more of the following communication scenarios: enhanced mobile broadband (enhanced mobile broadband, eMBB), ultra-reliable low-latency communication (ultra-reliable low-latency communication, URLLC), machine type communication (machine type communication, MTC), massive machine-type communications (massive machine-type communications, mMTC), device to device (device to device, D2D), vehicle to everything (vehicle to everything, V2X), vehicle to vehicle (vehicle to vehicle, V2V), and internet of things (internet of things, IoT).

In embodiments of this application, the P-CSCF device, the I-CSCF device, and the S-CSCF device in the IMS network may be considered as different types of SIP proxies or servers. The P-CSCF device, the I-CSCF device, and the S-CSCF device may be separately deployed in the IMS network, as shown in FIG. 3; or the P-CSCF device, the I-CSCF device, and the S-CSCF device may be co-deployed. For example, the I-CSCF device and the S-CSCF device are not deployed independently, but functions of the I-CSCF device and the S-CSCF device are integrated into the P-CSCF device, so that the P-CSCF device has the functions of the I-CSCF device and the S-CSCF device.

The following describes the network elements in the architecture shown in FIG. 3.

The user equipment (user equipment, UE) may be a terminal (terminal, MT), a mobile station (mobile station, MS), a mobile terminal (mobile terminal, MT), or the like. Specifically, the user equipment may be a mobile phone (mobile phone), a tablet computer (tablet), or a computer with a wireless transceiver function; or may be a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid, a wireless terminal in a smart city (smart city), a smart home, a vehicle-mounted terminal, or the like. The user equipment may be first connected to an access network device, and then may access an IMS network through a packet data serving node (packet data serving node, PDSN).

The access network device is mainly configured to provide a network service for user equipment to access an IMS network, and implement at least one function of resource scheduling, radio resource management, and radio access control of the user equipment. Specifically, the access network device may include any node of a base station, a wireless access point, a transmission reception point (transmission reception point, TRP), a transmission point (transmission point, TP), and another access node.

The P-CSCF device is an entry point for user equipment to access an IMS network and is responsible for interaction with the user equipment. The P-CSCF device is mainly configured to: generate a call detail record (call detail record, CDR) and a user roaming charging requirement, provide SIP compression and integrity protection over a Gm interface, and enable a request of the user equipment to be routed to a correct I-CSCF device/S-CSCF device.

The I-CSCF device is mainly configured to: when user equipment is registered, allocate an S-CSCF device serving the user equipment, and select an S-CSCF device with which a called party is registered for an incoming call.

The S-CSCF device implements user equipment registration authentication, service trigger and control, session routing, and the like.

The AS is responsible for processing a specific service, for example, providing a value-added-to-call service for user equipment.

The SBC is a network element at the edge of an IMS network for implementing IP access, interworking, and security protection, is located between an access network and the IMS network or between different IMS networks, and is an entry point for a user to access the IMS network.

The HSS is a main data storage of all data related to users and services in an IMS. The data stored in the HSS mainly includes user identity, registration information, access parameters, service triggering information, user equipment identity information, a user security context, key information for user network access authentication, and roaming restriction information. The HSS supports user registration, and stores user location information and user service subscription information.

It should be noted that FIG. 3 is merely an example architectural diagram. In addition to the functional units shown in FIG. 3, the communication system may further include another functional network element, for example, a domain name system (domain name system, DNS) server. This is not limited in embodiments of this application. In addition, names of the devices in FIG. 3 are not limited. In addition to the names shown in FIG. 3, the devices may also have other names. For example, the names may be replaced with names of network elements having same or similar functions. This is not limited.

Optionally, the P-CSCF device, the I-CSCF device, the S-CSCF device, or the like in embodiments of this application may also be referred to as a communication apparatus, and may be a desktop computer, a portable computer, a network server, a mobile phone, a tablet computer, a wireless terminal, an embedded device, a chip system, or the like. This is not specifically limited in embodiments of this application. In embodiments of this application, the chip system may include a chip; or may include a chip and another discrete component.

Optionally, related functions of the P-CSCF device, the I-CSCF device, and the S-CSCF device in embodiments of this application may be implemented by one device, or may be jointly implemented by a plurality of devices, or may be implemented by one or more functional modules in one device. This is not specifically limited in embodiments of this application. It may be understood that the foregoing function may be a network element in a hardware device, may be a software function running on dedicated hardware, a combination of hardware and software, or a virtualization function instantiated on a platform (for example, a cloud platform).

With reference to the network architecture shown in FIG. 3, the following describes the call method provided in embodiments of this application by using an example in which user equipment roams to an area outside a home area, and the user equipment initiates a call to a called party in the area outside the home area of the user equipment. It should be noted that actions, terms, and the like in embodiments of this application may be mutually referenced. In embodiments of this application, a name of a message exchanged between network elements, a name of a parameter in a message, or the like is merely an example, and another name may alternatively be used in a specific implementation. For example, "roaming" in embodiments of this application may also be understood as "visiting", "include" in embodiments of this application may also be understood as "carry" or the like, "storing" in embodiments of this application may also be understood as "recording", "saving", or the like. In embodiments of this application, "an AS in the roaming area" may be replaced with "first AS", "an AS in the home area" may be replaced with "second AS", and the like. An I-CSCF device or an S-CSCF device in a home area of roaming-in user equipment may be replaced with a "third CSCF device", and the like. This is uniformly described herein. This is not specifically limited in embodiments of this application.

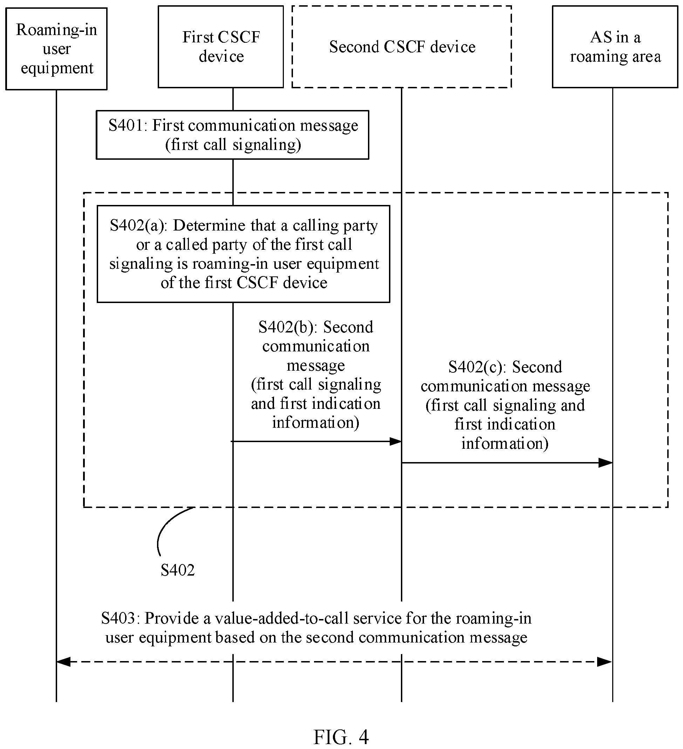

FIG. 4 is a flowchart of a call method according to an embodiment of this application. As shown in FIG. 4, in the method, it is assumed that user equipment roams to an area in which a first CSCF device is located (or a home area of the first CSCF device), becomes roaming-in user equipment of the first CSCF device, and participates in a call service as a calling party or a called party. The method includes the following steps.

S401: The first CSCF device receives a first communication message.

Specifically, the first communication message is a communication message that is initiated by a calling party (caller/calling party, also referred to as an originating party, originating party) and used to call a called party (callee/called party, also referred to as a receiver or a terminating party, terminating party), for example, a SIP message, and may also be referred to as a call message or an access message. The first communication message includes first call signaling initiated by the calling party. The first call signaling may be SIP Invite signaling. The first call signaling may include information about the calling party and information about the called party. The first communication message may further include other information, for example, may further include a content type (content-Type) header field that indicates a media type of a call service (for example, a voice call service or a video call service) corresponding to the first call signaling, a route-related field that identifies a device that the first call signaling passes through, and a message body. The route-related field may include but is not limited to a "via" header field, a "contact" header field, or a record-route (record-route)/route (route) header field. The message body may include session description information, and the session description information includes information about media content, for example, a transmission manner and a coding/decoding manner of the media content.

Specifically, the information of the calling party indicates the calling party or identifies the originating party of the first call signaling, includes a number of the calling party, an international mobile subscriber identity (international mobile subscriber identity, IMSI) of the calling party, a source address of the first communication message, or the like, and may be carried in a "from" header field or an P-Asserted-Identity (P-Asserted-Identity, PAI) header field of the first communication message.

Specifically, the information about the called party may indicate the called party or identify the terminating party of the first call signaling, includes a phone number or an IMSI of the called party, a destination address of the first communication message, or the like, and may be carried in a "to" header field of the first communication message.

Specifically, the first CSCF device may be the P-CSCF device 12, the P-CSCF device 21, or the P-CSCF device 32 in FIG. 3. The calling party or the called party of the first call signaling may be the roaming-in user equipment of the first CSCF device.

Specifically, an example method for receiving the first communication message by the first CSCF device is as follows:
(1) When the calling party of the first call signaling is roaming-in user equipment of the first CSCF device, the first CSCF device directly or indirectly receives the first communication message from the calling party. For example, the first communication message is received through an intermediate network element between the calling party and the first CSCF device. The intermediate network element may be an access network device, an SBC, or the like. FIG. 3 is used as an example. It is assumed that the calling party is the UE 1, and the UE 1 moves from a coverage area of the access network device 10 to a coverage area of the access network device 20. If the first CSCF device is the P-CSCF device 21, the intermediate network element is the access network device 20. If the first CSCF device is the P-CSCF device 32, intermediate network elements are the access network device 20 and the SBC 31.
(2) When the called party of the first call signaling is roaming-in user equipment of the first CSCF device, the first CSCF device directly or indirectly receives the first communication message from a second CSCF device in a home area of the called party, where the second CSCF device in the home area of the called party may be an I-CSCF device or an S-CSCF device in the home area of the called party. FIG. 3 is used as an example. It is assumed that the called party is the UE 2, and a home area of the UE 2 is a coverage area of the access network device 10. In this case, the second CSCF device in the home area of the UE 2 is the I-CSCF device 14 or the S-CSCF device 15 in FIG. 3.

It should be understood that in this embodiment of this application, the first call signaling may be the SIP Invite signaling, or may be other call signaling related to a call service between the roaming-in user equipment and another call device, for example, may be signaling shown in Table 1. However, for ease of description, the SIP-Invite signaling is mainly used as an example to describe a related solution in this embodiment of this application. Details are not described again.

**Table 1**

| Call signaling |
|---|
| Calling party call initiation signaling: Invite |
| Called party busy signaling: 486 (Busy Here reason=17) |
| Called party power-off signaling: 487 (Request Terminated reason=31) |
| Called party no answer signaling: 408 (Request Timeout reason=19) |
| Called party unavailable signaling: 480 (Temporarily unavailable reason=18) |
| Called party waiting signaling: 180 (carrying an alert-info header field) |
| Called party call forwarding signaling: 181 or 183 (carrying forwarding information) |
| Called party ringing signaling: 180 |
| Called party off-hook signaling: 200 OK-invite |
| Calling party on-hook signaling: bye (leg=1) |
| Called party on-hook signaling: bye (leg=2) |

It should be noted that, Table 1 is merely an example table, and a type of the first call signaling is not limited in this embodiment of this application. The first call signaling may alternatively be signaling other than the signaling shown in Table 1.

S402: The first CSCF device enables, based on the first communication message, the first call signaling to be routed to an AS in the roaming area of the roaming-in user equipment, where the AS in the roaming area is an AS that is capable of providing a value-added-to-call service for user equipment and that is in the home area of the first CSCF device.

For related descriptions of the value-added-to-call service in S402, refer to the foregoing descriptions. Details are not described again. For example, that the first CSCF device enables, based on the first communication message, the first call signaling to be routed to an AS in the roaming area of the roaming-in user equipment may include: The first CSCF device determines, based on the first communication message, that the calling party or the called party of the first call signaling is roaming-in user equipment of the first CSCF device, and directly sends a second communication message including the first call signaling to the AS in the roaming area. Alternatively, the first CSCF device enables the first call signaling to be routed to the AS in the roaming area of the roaming-in user equipment through the second CSCF device in the home area of the first CSCF device. For example, the roaming-in user equipment is the UE 1 in FIG. 3, and an AS in the roaming area of the UE 1 is the AS 24 or the AS 35 in FIG. 3. As shown in S402(a) to S402(c) in FIG. 4, descriptions are separately as follows:
S402(a): The first CSCF device determines, based on the first communication message, that the calling party or the called party of the first call signaling is roaming-in user equipment of the first CSCF device.

For example, when the calling party of the first call signaling is roaming-in user equipment of the first CSCF device, the first CSCF device may determine a home area of the calling party based on the information that is about the calling party and that is carried in the "from" header field or the PAI header field in the first communication message, and determine that the home area of the calling party is different from the home area of the first CSCF, so as to determine that the calling party of the first call signaling is roaming-in user equipment of the first CSCF device; otherwise, determine that the calling party is in the home area of the calling party, and is not the roaming-in user equipment.

For example, the information about the calling party is a mobile phone number 135XXXX4308 of the calling party. The first CSCF device may determine, based on the mobile phone number of the calling party and a correspondence, shown in the following Table 2, between a home area and a number segment that is in a mobile phone number and that identifies the home area, that a home area corresponding to a mobile phone number segment of the calling party is an area 1.

**Table 2**

| Number segment | Home area |
|---|---|
| 135XXXX | Area 1 |
| 135YYYY | Area 2 |

For example, when the called party of the first call signaling is roaming-in user equipment of the first CSCF device, the first CSCF device may determine the home area of the called party based on the information that is about the called party and that is carried in the "to" header field in the first communication message, and further determine that the home area of the called party is different from the home area of the first CSCF, so as to determine that the called party is roaming-in user equipment of the first CSCF device; otherwise, determine that the called party is in the home area of the called party.

Further, S402(b) is performed.

Specifically, after the first CSCF device determines that the calling party or the called party of the first call signaling is roaming-in user equipment, and before S402(b) is performed, the method may further include: The first CSCF device determines that the roaming-in user equipment is capable of using the value-added-to-call service provided by the AS in the home area of the first CSCF device (namely, a roaming area of the roaming-in user equipment). In this way, only when it is determined that the roaming-in user equipment supports the value-added-to-call service provided by the AS in the roaming area, the AS in the roaming area is triggered to provide the value-added-to-call service for the roaming-in user equipment, so as to avoid a problem that user experience is affected because the value-added-to-call service in the roaming location cannot be used because the roaming-in user equipment does not support the value-added-to-call service provided by the AS in the roaming area.

For example, the first CSCF device may obtain capability information of the roaming-in user equipment from the first communication message, or may request to obtain the capability information of the roaming-in user equipment from a device such as an HSS.

For example, the first CSCF device may determine, according to a configuration policy and/or the capability information of the roaming-in user equipment, that the roaming-in user equipment is capable of using the value-added-to-call service provided by the AS in the home area of the first CSCF device.

Specifically, the configuration policy may be used to determine the roaming-in user equipment that is capable of using the value-added-to-call service provided by the AS in the home area of the first CSCF device. The configuration policy may include access information corresponding to the roaming-in user equipment, for example, one or more types of configuration information such as access network device information, cell location information, and an access network type of the roaming-in user equipment. The configuration policy may be pre-stored in the first CSCF device or obtained by the first CSCF device from another device (for example, the HSS). This is not limited. If the access information of the roaming-in user equipment satisfies a stipulation of the configuration policy and/or the capability information of the roaming-in user equipment indicates that the roaming-in user equipment has the capability (for example, a media content decoding capability, a network capability, or a storage capability) of using the value-added-to-call service provided by the AS in the roaming area, it is determined that the roaming-in user equipment is capable of using the value-added-to-call service provided by the AS in the home area of the first CSCF device.

Specifically, the access network device information may identify an access network device, and is an internet protocol (internet protocol, IP) address, a media access control (media access control, MAC) address, or the like of the access network device.

Specifically, the cell location information may identify a cell, and the cell location information may be a physical cell identifier (physical cell identifier, PCI) or a cell global identifier (cell global identifier, CGI) of the cell.

Specifically, the access network type may indicate a radio access technology (radio access technology, RAT) or a fixed access technology used by an access network. The RAT may include any access technology of Bluetooth access, wireless fidelity (wireless fidelity, Wi-Fi) access, new radio (new radio, NR) access, and long term evolution (long term evolution, LTE) access. The fixed access technology may include a local area network (local area network, LAN) technology, a wireless local area network (wireless local area network, WLAN) technology, various digital subscriber line (digital subscribe line, xDSL) technologies, an xPON technology, or the like.

Optionally, the first CSCF device may obtain the capability information and the access information of the roaming-in user equipment from the access network device of the roaming-in user equipment.

It should be understood that, for the access information of the roaming-in user equipment and the capability information of the roaming-in user equipment in another embodiment of this application, refer to the foregoing related descriptions. Details are not described again.

S402(b): The first CSCF device sends the second communication message to the second CSCF device in the home area of the first CSCF device in response to a determining result in S402(a).

Specifically, the second CSCF device in the home area of the first CSCF device may be an I-CSCF device or an S-CSCF device in the home area of the first CSCF device.

Specifically, the second communication message may be a SIP message, and the second communication message may include parameters included in an existing communication message (for example, the first communication message), for example, include the first call signaling, the route-related field, the message body, and the like. In addition, the second communication message may further include first indication information. A name of the first indication information is not limited, may be referred to as a "roaming-in flag", a "route flag", or a "flag 1", and may indicate that the calling party or the called party of the first call signaling is roaming-in user equipment of the first CSCF device, so that the second CSCF device determines, based on the first indication information, that the calling party or the called party of the first call signaling is roaming-in user equipment, and triggers the AS in the roaming area of the roaming-in user equipment to provide the value-added-to-call service for the roaming-in user equipment.

Further, the first indication information may further indicate the first call signaling or second call signaling of the call service corresponding to the first call signaling to be routed to the AS in the roaming area of the roaming-in user equipment. The call service is described above. In this embodiment of this application, call signaling of the call service may include the first call signaling and the second call signaling. The second call signaling of the call service is other call signaling related to the call service than the first call signaling or other call signaling transmitted after the first call signaling. For example, the second call signaling may include the signaling shown in Table 1. For example, it is assumed that the first call signaling included in the first communication message is SIP Invite signaling, and the second call signaling of the corresponding call service may be called party busy signaling, called party power-off signaling, called party no answer signaling, called party unavailable signaling, called party waiting signaling, called party call forwarding signaling, called party ringing signaling, called party off-hook signaling, calling party on-hook signaling, or called party on-hook signaling.

It should be understood that, the first indication information is essentially "route indication information". The route indication information may be used to change a call route that the call signaling of the call service transmitted between the calling party and the called party passes through, where the call route passes through the AS in the roaming area of the roaming-in user equipment, so that the call signaling of the call service is routed to the AS in the roaming area of the roaming-in user equipment, and the AS in the roaming area of the roaming-in user equipment has an opportunity to provide the value-added-to-call service for the roaming-in user equipment, for example, triggers, in a call service process, the roaming-in user equipment to present media content. After a call route that the 1^{st} piece of call signaling (for example, an INVITE message during call initiation) of the call service passes through is determined, subsequent call signaling corresponding to the call service can be transmitted based on the call route.

To determine the call route that the 1^{st} piece of call signaling (for example, the INVITE message during the call initiation) of the call service passes through, and enable the subsequent call signaling corresponding to the call service to be transmitted based on the call route, each device on the call route may store a correspondence between the first indication information and the call service corresponding to the 1^{st} piece of call signaling or a correspondence between the first indication information and a communication session corresponding to the 1^{st} piece of call signaling. In this way, after other call signaling corresponding to the same call service or the communication session is received subsequently, the first indication information may be obtained based on a stored correspondence, and then it is determined, based on the first indication information, to enable the 1^{st} piece of call signaling to be routed to the AS in the roaming area.

For example, a calling party is roaming-in user equipment of the first CSCF device, and the calling party sends SIP Invite signaling to a called party. An original route of the SIP Invite signaling (the calling party - a first CSCF device in a roaming area of the calling party - an I-CSCF device/S-CSCF device in a home area of the calling party - the called party) may be changed to the following route by using the first indication information: (the calling party - the first CSCF device in the roaming area of the calling party - an I-CSCF device/S-CSCF device in the roaming area of the calling party -an AS in the roaming area of the calling party - the I-CSCF device/S-CSCF device in the roaming area of the calling party - the I-CSCF device/S-CSCF device in the home area of the calling party - the called party). The first CSCF device in the roaming area of the calling party, the I-CSCF device/S-CSCF device in the roaming area of the calling party, the AS in the roaming area of the calling party, the I-CSCF device/S-CSCF device in the roaming area of the calling party, the I-CSCF device/S-CSCF device in the home area of the calling party, and the like in the changed route may store a correspondence between the first indication information and the call service corresponding to the first call signaling or a correspondence between the first indication information and the communication session corresponding to the first call signaling, for example, store a correspondence between the first indication information and a call service identifier or a correspondence between the first indication information and a communication session identifier.

Specifically, each device on the changed route may include the first indication information in a communication message (for example, the second communication message or another communication message) in the following manner 1 or manner 2:
Manner 1: The first indication information is carried by using a new header field in the communication message. For example, the new header field may be a P-visited-incoming-indication (P-visited-incoming-indication) header field.
Manner 2: The first indication information is carried by using an attribute of an existing header field in the communication message. For example, an attribute of an existing P-Access-Network-Info header field includes a roam-incoming-indication (roam-incoming-indication), and a value of the roam-incoming-indication identifies whether the calling party or the called party of the first call signaling is roaming-in user equipment.

For example, as shown in the following fields, in addition to existing fields, the P-Access-Network-Info header field further includes roam-incoming-indication=1, indicating that the calling party or the called party of the first call signaling is roaming-in user equipment.

P-Access-Network-Info:
3GPP-E-UTRAN; utran-cell-id-3gpp=46001251C6042203; roam-incoming-indication=1; ue-ip=[2408:8556:41C:B3BF:7BDA:1BDD:2241:5983]; ue-port=43518; network-provided.

In an example, when the first CSCF device and the I-CSCF device/S-CSCF device are independently deployed, that the first CSCF device sends the second communication message to the AS in the home area of the first CSCF device may include: The first CSCF device sends the second communication message to the second CSCF device in the home area of the first CSCF device, where the second CSCF device may be an I-CSCF device/S-CSCF device in the home area of the first CSCF device; and the second CSCF device receives the second communication message, and sends the second communication message to the AS in the home area of the first CSCF device.

In this example, because the calling party or the called party of the first call signaling is roaming-in user equipment of the first CSCF device, and the roaming-in user equipment does not register in the home area of the first CSCF device, the first CSCF device does not have registration information of the roaming-in user equipment, and the first CSCF device cannot locally find the I-CSCF device/S-CSCF device with which the roaming-in user equipment registers. In view of this, the first CSCF device may randomly select one CSCF device from a plurality of CSCF devices in the home area of the first CSCF device as the second CSCF device; or select, according to a load balancing principle, a CSCF device with minimum load or whose load is less than a preset threshold from a plurality of CSCF devices in the home area of the first CSCF device as the second CSCF device. The preset threshold may be set based on a requirement, and is not limited.

Specifically, the plurality of CSCF devices in the home area of the first CSCF device may be a plurality of I-CSCF devices or S-CSCF devices in the home area of the first CSCF device.

Specifically, the selecting a CSCF device with minimum load as the second CSCF device may include: if the first call signaling carried in the first communication message is an M^{th} piece of first call signaling received by the first CSCF device, selecting an i^{th} CSCF device in M CSCF devices in the home area of the first CSCF device as the second CSCF device, where i=MmodN, and M and N are integers greater than or equal to 1.

For example, an example in which the second CSCF device is an I-CSCF device is used, and there are five I-CSCF devices in the home area of the first CSCF device. The first CSCF device may include the first piece of received first call signaling in the communication message and send the communication message to the first I-CSCF device, include the second piece of received first call signaling in the communication message and send the communication message to the second I-CSCF device, include the third piece of received first call signaling in the communication message and send the communication message to the third I-CSCF device, include the fourth piece of received first call signaling in the communication message and send the communication message to the fourth I-CSCF device; by analogy, include the fifth piece of received first call signaling in the communication message and send the communication message to the fifth I-CSCF device, include the sixth piece of first call signaling in the communication message and send the communication message to the first I-CSCF device, and include the eighth piece of first call signaling in the communication message and send the communication message to the third I-CSCF device.

Optionally, the second communication message may further include address information of the second CSCF device. For example, a routing related field of the second communication message includes the address information of the second CSCF device, so that a previous hop of the second CSCF device enables, based on the address information of the second CSCF device, the first call signaling or the second call signaling of the call service corresponding to the first call signaling to be routed to the second CSCF device.

S402(c): The second CSCF device in the home area of the first CSCF device receives the second communication message sent by the first CSCF device, and enables, based on the second communication message, the first call signaling to be routed to the AS in the roaming area of the roaming-in user equipment.

For example, the second CSCF device in the home area of the first CSCF device determines, based on the first indication information included in the second communication message, that the calling party or the called party of the first call signaling is roaming-in user equipment of the first CSCF device, and sends the second communication message to the AS in the roaming area of the roaming-in user equipment. Further, as described above, to subsequently enable other call signaling of the call service to be routed to the AS in the roaming area, the second CSCF device in the home area of the first CSCF device may store the correspondence between the first indication information and the call service corresponding to the first call signaling or the correspondence between the first indication information and the communication session corresponding to the first call signaling.

The calling party or the called party of the first call signaling is roaming-in user equipment of the first CSCF device, and an HSS in the home area of the first CSCF device does not have subscription information or registration information of the roaming-in user equipment. Therefore, when receiving the second communication message, the second CSCF device does not perform authentication processing on the roaming-in user equipment by exchanging signaling with the HSS, but directly performs initial filter criterion (initial filter criteria, iFC) trigger logic. For example, the second CSCF device may traverse each AS in the home area of the first CSCF device, and check, based on a header field or message content of the received second communication message, whether the second communication message satisfies a trigger condition provided by the AS in the home area of the first CSCF device (namely, the AS in the roaming area of the roaming-in user equipment), that is, perform iFC determining. If yes, the second CSCF device sends the second communication message to the AS in the home area of the first CSCF device, so as to trigger the AS in the home area of the first CSCF device to provide the value-added-to-call service to the roaming-in user equipment. If not, the second CSCF device does not send the second communication message, and the AS in the home area of the first CSCF device is not triggered to provide the call value-added service.

For a process in which the second CSCF device checks, based on the header field or message content of the second communication message, whether the second communication message satisfies the trigger condition set by the AS in the home area of the first CSCF device, refer to the conventional technology. Details are not described. For example, if roaming-in user equipment subscribes to an instant messaging service, any field or content of a message body of a SIP message sent by the roaming-in user equipment and a combination thereof satisfy a trigger condition corresponding to an instant messaging server.

It should be noted that the process shown in S402(b) and S402(c) may be applied to a scenario in which the first CSCF device and the second CSCF device are separated. Alternatively, when the second CSCF device is centrally deployed on the first CSCF device, S402(b) and S402(c) may be replaced with that the first CSCF device directly sends the second communication message to the AS in the roaming area of the roaming-in user equipment. For example, after receiving the first communication message, and determining, based on the first communication message, that the calling party or the called party of the first call signaling is roaming-in user equipment, the first CSCF device performs iFC trigger logic, determines, based on a header field or message content of the first communication message, a specific AS that is in the home area of the first CSCF device and whose trigger condition satisfies a trigger condition existing in the first communication message, and sends the second communication message to the AS, to trigger the AS to provide the call value-added service.

S403: The AS in the roaming area (to be specific, the AS in the home area of the first CSCF device) of the roaming-in user equipment receives the second communication message, and provides the value-added-to-call service for the roaming-in user equipment based on the second communication message.

A manner in which the AS in the roaming area of the roaming-in user equipment provides the value-added-to-call service for the roaming-in user equipment based on the second communication message may be the following manner 1 or manner 2:
Manner 1: The AS in the roaming area of the roaming-in user equipment determines, based on the first indication information in the second communication message, that the calling party or the called party of the first call signaling is roaming-in user equipment. If the AS in the roaming area determines, according to a service priority processing policy, that the AS in the roaming area preferentially provides the value-added-to-call service for the roaming-in user equipment, the AS in the roaming area provides the value-added-to-call service for the roaming-in user equipment before a call connection, to complete roaming location service logic with the roaming-in user equipment. For example, the AS in the roaming area may establish a media channel with the roaming-in user equipment before the call connection, provide a media stream corresponding to the value-added-to-call service for the roaming-in user equipment through the media channel, trigger the roaming-in user equipment to present media content, game content, or the like on an APP interface related to the call service corresponding to the first call signaling, and use the call value-added service.

In the manner 1, the AS in the roaming area may already provide the value-added-to-call service for the roaming-in user equipment before the call connection is completed or during the call connection. For example, a calling party is roaming-in user equipment, a call service is a voice call service, and a value-added-to-call service is a customized ring back tone service. In this case, an AS in the roaming area may provide the customized ring back tone service for the calling party in a period from a time point at which the calling party dials a phone number to a time point at which a called party rings.

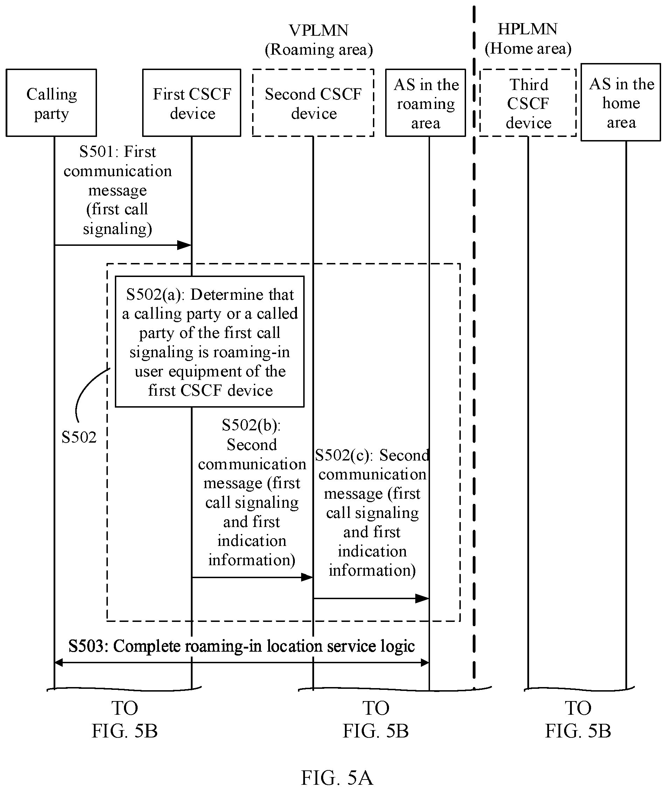

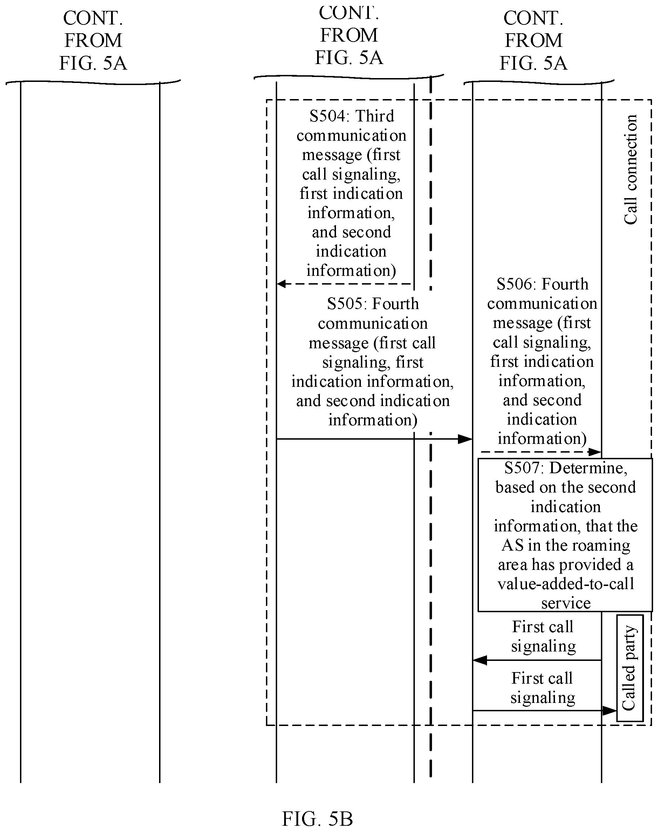

Specifically, the call connection may be a process in which the AS in the roaming area sends the first call signaling till the first call signaling reaches the called party. When the roaming-in user equipment is the calling party, the call connection may include S504 to S507 shown in FIG. 5A and FIG. 5B. When the roaming-in user equipment is the called party of the first call signaling, the call connection may include: The AS in the roaming area of the roaming-in user equipment sends the first call signaling to the first CSCF device or the second CSCF device in the home area of the first CSCF device. The first CSCF device or the second CSCF device in the home area of the first CSCF device receives the first call signaling, and sends the first call signaling to the called party. In this case, the call connection is completed.

Specifically, the service priority processing policy may be used to specify priorities of providing the value-added-to-call service by the AS in the roaming area and an AS in the home area, and may be used to specify whether the AS in the roaming area preferentially provides the value-added-to-call service for the roaming-in user equipment, or the AS in the home area preferentially provides the value-added-to-call service for the roaming-in user equipment. The service priority processing policy may be pre-configured in the AS in the roaming area and the AS in the home area of the roaming-in user equipment, or may be obtained by the AS in the roaming area from another device, for example, from an HSS.

Manner 2: The AS in the roaming area of the roaming-in user equipment determines, based on the first indication information in the second communication message, that the calling party or the called party of the first call signaling is roaming-in user equipment. If the AS in the roaming area determines, according to the service priority processing policy, that the AS in the roaming area preferentially provides the value-added-to-call service for the roaming-in user equipment, the AS in the roaming area provides the value-added-to-call service for the roaming-in user equipment. It should be understood that, in this case, the AS in the roaming area may perform preparations such as configuration information transmission for providing the call value-added service, and does not provide the value-added-to-call service for the roaming-in user equipment.

Further, the AS in the roaming area sends a third communication message to the first CSCF device or the second CSCF device in the home area of the first CSCF device, to implement a call connection. The third communication message includes the first call signaling, the first indication information, and second indication information, where the second indication information indicates that the AS in the roaming area is to provide a value-added-to-call service for the roaming-in user equipment. It should be noted that the second indication information may be included in the third communication message, or may not be included in the third communication message. This is not limited.

After the call connection is completed, the third CSCF device in a home area of the roaming-in user equipment sends a fifth communication message to the first CSCF device or the second CSCF device in the home area of the first CSCF device, where the fifth communication message includes the first indication information; and the first CSCF device or the second CSCF device in the home area of the first CSCF device sends a sixth communication message to the AS in the roaming area based on the first indication information, where the sixth communication message includes the first indication information and the third indication information. The AS in the roaming area receives the sixth communication message from the first CSCF device or the second CSCF device in the home area of the first CSCF device, where the sixth communication message includes the first indication information. It should be noted that the first CSCF device or the second CSCF device in the home area of the first CSCF device may directly send the sixth communication message to the AS in the roaming area, or may send the sixth communication message to the AS in the roaming area through an intermediate device. This is not limited.

Further, if the AS in the home area of the roaming-in user equipment determines, according to the service priority policy, that the AS in the home area preferentially provides the value-added-to-call service for the roaming-in user equipment, the fifth communication message and the sixth communication message may further include the third indication information, where the third indication information indicates that the AS in the home area of the roaming-in user equipment is to provide the value-added-to-call service for the roaming-in user equipment. On the contrary, if the AS in the home area of the roaming-in user equipment determines, according to the service priority policy, that the AS in the roaming area preferentially provides the value-added-to-call service for the roaming-in user equipment, the fifth communication message and the sixth communication message do not include the third indication information.

Further, if the sixth communication message received by the AS in the roaming area includes the third indication information, the AS in the roaming area determines, according to the service priority processing policy and the third indication information, whether the AS in the roaming area preferentially provides the value-added-to-call service for the roaming-in user equipment, and if yes, provides the value-added-to-call service for the roaming-in user equipment; or if not, does not provide the value-added-to-call service for the roaming-in user equipment.

Further, as described above, to subsequently enable other call signaling of the call service to be routed to the AS in the roaming area, the AS in the roaming area may store the correspondence between the first indication information and the call service corresponding to the first call signaling or the correspondence between the first indication information and the communication session corresponding to the first call signaling.

Based on the method shown in FIG. 4, when it is determined that the calling party or the called party of the first call signaling is roaming-in user equipment of the first CSCF device, the first call signaling is routed to the AS in the roaming area of the roaming-in user equipment, and the AS in the roaming area of the roaming-in user equipment provides the value-added-to-call service for the roaming-in user equipment. Because user equipment roaming outside a home area of the user equipment is close to an AS in the roaming area of the user equipment, the AS in the roaming area of the roaming-in user equipment provides the value-added-to-call service for the user equipment. Because the roaming-in user equipment is close to the AS in the roaming area, an end-to-end delay between the roaming-in user equipment and the AS in the roaming area is low, so that user experience is improved. In addition, in the call method provided in this embodiment of this application, the application server can provide the value-added-to-call service for a local calling party, and can further provide the value-added-to-call service for roaming-in user equipment that roams to the home area, so that an opportunity for the AS to serve a calling party is increased and network resource utilization is improved.

With reference to FIG. 5A and FIG. 5B, the following describes the connection process in the embodiment corresponding to FIG. 4 by using an example in which the calling party of the first call signaling is roaming-in user equipment, and the AS in the roaming area of the roaming-in user equipment already provides the value-added-to-call service for the roaming-in user equipment before the call connection. For a connection process when the called party of the first call signaling is roaming-in user equipment, refer to the conventional technology. Details are not described.

FIG. 5A and FIG. 5B are a flowchart of a call method according to an embodiment of this application. The method includes S501 to S507.

S501 to S503 are performed. S501 to S503 are the same as S401 to S403 in FIG. 4, and details are not described again.

S504: The roaming-in area AS of the roaming-in user equipment sends a third communication message to the second CSCF device in the home area of the first CSCF device.

The third communication message may include the first call signaling, the first indication information, and another existing header field or message.

In a call connection process, the AS in the home area of the roaming-in user equipment may be triggered to provide the value-added-to-call service for the roaming-in user equipment. Further, to avoid a service conflict problem caused when both the AS of the roaming area of the roaming-in user equipment and the AS in the home area of the roaming-in user equipment provide the value-added-to-call service for the roaming-in user equipment, the third communication message may further include second indication information, to indicate that the AS in the roaming area of the roaming-in user equipment has provided the value-added-to-call service for the roaming-in user equipment, so that the AS in the home area of the roaming-in user equipment learns, based on the second indication information, that the AS in the roaming area of the roaming-in user equipment has provided the value-added-to-call service for the roaming-in user equipment, and does not trigger a home location service process.

Specifically, a name of the second indication information is not limited, and may be referred to as a "service identifier", a "flag 2", or a "roaming location service identifier". If the AS in the roaming area has provided the value-added-to-call service for the roaming-in user equipment before configuring the second indication information, the second indication information may indicate, as described above, that the AS in the roaming area has provided the value-added-to-call service for the roaming-in user equipment. If the AS in the roaming area determines, before configuring the second indication information, that the AS in the roaming area may provide the value-added-to-call service for the roaming-in user equipment and is preparing for providing the call value-added service, the second indication information may indicate that the AS in the roaming area is to provide a value-added-to-call service for the roaming-in user equipment. Similarly, with reference to a function of the first indication information, if the AS in the home area or another AS also determines that the AS in the home area or the another AS may provide the value-added-to-call service for the roaming-in user equipment, one piece of indication information, for example, third indication information, may also be allocated to the AS in the home area or the another AS, where the third indication information may be indication information indicating that the AS in the home area or the another AS is to provide the value-added-to-call service for the roaming-in user equipment, so that an AS receiving the third indication information learns, based on the third indication information, of a status in which the AS in the home area or the another AS provides the call value-added service, and takes a corresponding measure to avoid a service conflict.

Using the second indication information as an example, it should be understood that the second indication information is essentially "service indication information", and the service indication information can avoid a service conflict between the AS in the home area or another AS in the home area of the roaming-in user equipment and the AS in the roaming area. For example, in this embodiment of this application, the second indication information may be routed to the AS in the home area or another AS in the home area of the roaming-in user equipment based on the call route of the first call signaling. For example, a device on the call route of the first call signaling may include the second indication information in a communication message and enable the communication message to be routed to the AS in the home area or another AS in the home area of the roaming-in user equipment, so that the AS in the home area or the another AS learns, based on the second indication information, of a status in which the AS in the roaming area provides the value-added-to-call service for the roaming-in user equipment, to avoid a service conflict with the AS in the roaming area.

Specifically, each device on the call route of the first call signaling may include the second indication information in a communication message (for example, a third communication message or another communication message) in the following manner 1, manner 2, or manner 3:
Manner 1: The second indication information is carried by using a new header field in the communication message. For example, the new header field may be a P-visited-service-indication (P-visited-service-indication) header field.
Manner 2: The second indication information is carried by using an attribute of an existing header field in the communication message. For example, an attribute of an existing P-Asserted-Service-Info header field includes a service code (service-code), and a value of the service-code may indicate that the AS in the roaming area of the roaming-in user equipment has provided the value-added-to-call service for the roaming-in user equipment.
Manner 3: The second indication information is carried by using a message body of the communication message. For example, the second indication information: a=g.3gpp.rmas is added to a media description attribute line of session description information in the message body.

S505: The second CSCF device in the home area of the first CSCF device receives the third communication message, and sends a fourth communication message to a second CSCF device in the home area of the roaming-in user equipment.

Specifically, the second CSCF device in the home area of the roaming-in user equipment may be an I-CSCF device or an S-CSCF device in the home area of the roaming-in user equipment.

The fourth communication message in S505 may include content included in the third communication message, for example, may include the first call signaling, the first indication information, and the second indication information.

For example, the second CSCF device in the home area of the first CSCF device may determine the home area of the roaming-in user equipment based on a number segment of the roaming-in user equipment, obtain the subscription information of the roaming-in user equipment from an HSS in the home area of the roaming-in user equipment, determine the third CSCF device in the home area of the roaming-in user equipment based on the subscription information of the roaming-in user equipment, and send the fourth communication message to the third CSCF device in the home area. In this embodiment of this application, the third CSCF device may include an I-CSCF device or an S-CSCF device in the home area of the roaming-in user equipment, or another device that can receive the fourth communication message and enable the fourth communication message to be routed to the AS in the home area.

Further, as described above, to subsequently send other call signaling of the call service to the AS in the roaming area based on the call route, the third CSCF device in the home area of the roaming-in user equipment may store a correspondence between the first indication information and the call service corresponding to the first call signaling or a correspondence between the first indication information and the communication session corresponding to the first call signaling.

S506: The third CSCF device in the home area of the roaming-in user equipment receives the fourth communication message, and sends a seventh communication message to the AS in the home area of the roaming-in user equipment.

For example, the AS in the home area of the roaming-in user equipment receives the seventh communication message, interacts with the HSS in the home area to obtain an iFC trigger condition of the AS in the home area, and checks whether the seventh communication message satisfies the iFC trigger condition of the AS in the home area, and if the iFC trigger condition is satisfied, sends the seventh communication message to the AS in the home area.

Further, to subsequently send other call signaling of the call service to the AS in the roaming area based on the call route, the AS in the home area of the roaming-in user equipment may store the correspondence between the first indication information and the call service corresponding to the first call signaling or the correspondence between the first indication information and the communication session corresponding to the first call signaling.

S507: The AS in the home area of the roaming-in user equipment receives the seventh communication message, and learns, in response to the seventh communication message based on the second indication information in the seventh communication message, that the AS in the roaming area of the roaming-in user equipment has provided the value-added-to-call service for the roaming-in user equipment, and does not trigger the home location service procedure. Further, the AS in the home area of the roaming-in user equipment lets the first call signaling pass, and enables the first call signaling sent by the calling party to the called party to be routed to the called party, so as to complete the call connection. In addition, the call route that the call signaling of the call service passes through is set up.

It should be noted that, if the AS in the roaming area of the roaming-in user equipment does not provide the value-added-to-call service for the roaming-in user equipment before the call connection initiated by the AS in the roaming area, but determines that the AS in the roaming area prepares or plans to provide the value-added-to-call service for the roaming-in user equipment, the second indication information included in the third communication message sent by the AS in the roaming area may indicate that the AS in the roaming area is to provide a value-added-to-call service for the roaming-in user equipment. Subsequently, the AS in the home area receives the second indication information, and may determine, according to the service priority processing policy, whether the AS in the home area or the AS in the roaming area preferentially provides the value-added-to-call service to the roaming-in user equipment. If the AS in the home area preferentially provides the call value-added service, the AS in the home area replaces/overwrites the second indication information with the third indication information, and feeds back the third indication information to the AS in the roaming area, so that the AS in the roaming area finally determines, according to the service priority processing policy and the third indication information, whether the AS in the roaming area or the AS in the home area provides the call value-added service. Otherwise, if the AS in the roaming area preferentially provides the call value-added service, the AS in the home area does not trigger the home location service procedure and connects the call.

Further, the method further includes: The AS in the home area of the roaming-in user equipment enables, based on the seventh communication message, the first call signaling or the second call signaling of the call service corresponding to the first call signaling to be routed to the AS in the roaming area.

For example, when the calling party of the first call signaling is roaming-in user equipment of the first CSCF device, and the AS in the home area preferentially provides the call value-added service, after receiving the second call signaling/subsequent call signaling (for example, a response message corresponding to the INVITE message) of the call service from the called party, the AS in the home area of the roaming-in user equipment sends, based on the first indication information in the seventh communication message, an eighth communication message including the second call signaling of the call service, the first indication information, and the third indication information to the third CSCF device in the home location area of the roaming-in user equipment, where the third indication information indicates that the second AS is to provide the value-added-to-call service for the roaming-in user equipment. When the calling party of the first call signaling is roaming-in user equipment of the first CSCF device, and the AS in the roaming area preferentially provides the call value-added service, after receiving the second call signaling/subsequent call signaling (for example, a response message corresponding to the INVITE message) of the call service from the called party, the AS in the home area of the roaming-in user equipment sends an eighth communication message to the third CSCF device based on the first indication information in the seventh communication message, where the eighth communication message includes the second call signaling of the call service and the first indication information.

For another example, when the called party of the first call signaling is roaming-in user equipment of the first CSCF device, and the AS in the home area preferentially provides the call value-added service, the AS in the home area of the roaming-in user equipment sends, based on the first indication information in the seventh communication message, an eighth communication message including the first call signaling of the call service, the first indication information, and the third indication information to the third CSCF device in the home area of the roaming-in user equipment, where the third indication information indicates that the second AS is to provide the value-added-to-call service for the roaming-in user equipment. For another example, when the called party of the first call signaling is roaming-in user equipment of the first CSCF device, and the AS in the roaming area preferentially provides the call value-added service, after receiving the first call signaling/subsequent call signaling (for example, a response message corresponding to the INVITE message) of the call service from the called party, the AS in the home area of the roaming-in user equipment sends an eighth communication message to the third CSCF device based on the first indication information in the seventh communication message, where the eighth communication message includes the first call signaling of the call service and the first indication information.

Further, the third CSCF device in the home area of the roaming-in user equipment determines, based on the stored correspondence between the first indication information and the call service or the communication session, the first indication information corresponding to the current call service, and enables, based on the first indication information, content included in the eighth communication message to be routed to a P-CSCF device or an I-CSCF device/S-CSCF device in the roaming area of the roaming-in user equipment.

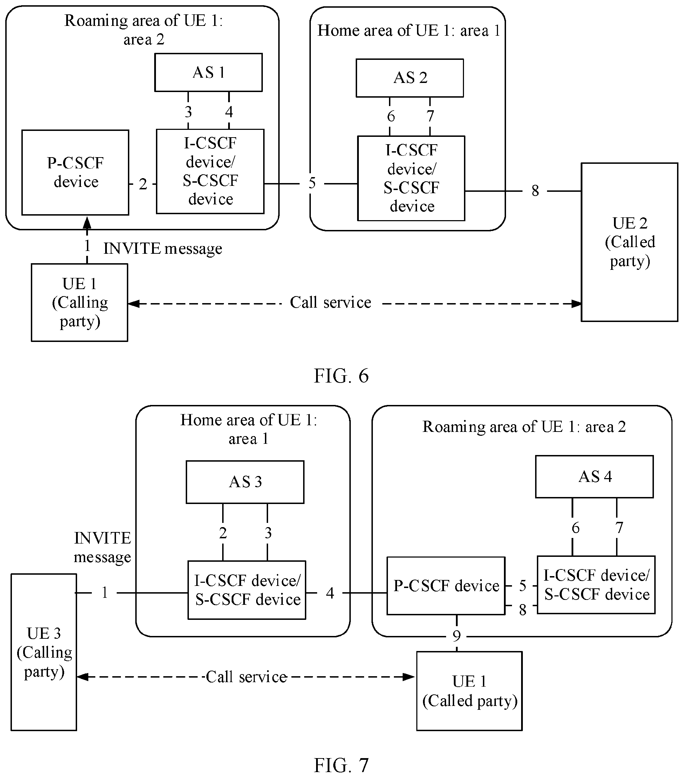

The method shown in FIG. 4 is described below with reference to a flow diagram of an INVITE message shown in FIG. 6. It is assumed that a calling party of first call signaling is UE 1, the UE 1 calls UE 2, a home area of the UE 1 is an area 1, the UE 1 currently roams to an area 2, and a home area of the UE 2 is an area 3. Indication information indicating that the calling party of the first call signaling is roaming-in user equipment is named as a network identifier, and indication information indicating that an AS is to provide a value-added-to-call service for the roaming-in user equipment is named as a service identifier. The message flow shown in FIG. 6 includes the following processes:
(1) The UE 1 sends the INVITE message to a P-CSCF device in the area 2.
(2) The P-CSCF device determines, based on a "from" header field in the INVITE message, that the UE 1 is roaming-in user equipment, allocates a network identifier 1, and sends the network identifier 1 and the INVITE message to an I-CSCF device/S-CSCF device in the area 2.
(3) The I-CSCF device in the area 2 sends the received network identifier 1 and the received INVITE message to the S-CSCF device. The S-CSCF device in the area 2 completes iFC trigger logic and sends the network identifier 1 and the INVITE message to an AS 1, in the area 2, that satisfies the iFC trigger condition.
(4) The AS 1 receives the network identifier 1 and the INVITE message, determines to provide the value-added-to-call service for the roaming-in user equipment, allocates a service identifier 1 that identifies that the AS 1 is to provide the value-added-to-call service for the UE 1, and sends the network identifier 1, the service identifier 1, and the INVITE message to the I-CSCF device/S-CSCF device in the area 2.
(5) The I-CSCF device/S-CSCF device in the area 2 receives the network identifier 1, the service identifier 1, and the INVITE message, and sends the network identifier 1, the service identifier 1, and the INVITE message to an I-CSCF device/S-CSCF device in the area 1.
(6) The I-CSCF device in the area 1 sends the received network identifier 1, service identifier 1, and INVITE message to the S-CSCF device in the area 1. The S-CSCF device in the area 1 completes iFC trigger logic and sends the network identifier 1, service identifier 1, and INVITE message to an AS 2 that satisfies the iFC trigger condition in the area 1.
(7) The AS 2 that satisfies the iFC trigger condition in the area 1 receives the network identifier 1, the service identifier 1, and the INVITE message. When it is determined, according to a service priority processing policy, that the AS 2 preferentially provides the value-added-to-call service for the UE 1, the AS 2 replaces the service identifier 1 with a service identifier 2, where the service identifier 2 indicates that the AS 2 is to provide the value-added-to-call service for the UE 1, and sends the network identifier 1, the service identifier 2, and the INVITE message to the I-CSCF device/S-CSCF device in the area 1. Otherwise, if it is determined, according to the service priority processing policy, that the AS 1 preferentially provides the value-added-to-call service for the UE 1, and sends the network identifier 1, the service identifier 1, and the INVITE message to the I-CSCF device/S-CSCF device in the area 1.
(8) The I-CSCF device/S-CSCF device in the area 1 receives the network identifier 1, the service identifier 2, and the INVITE message, and sends the INVITE message to the UE 2, to complete a call connection. Subsequently, the network identifier 1 and the service identifier 2/service identifier 1 are routed to the AS 1 in the roaming area of the UE 1, and the AS 1 finally determines, according to the service identifier 2/service identifier 1 and the service priority processing policy, whether the AS 1 or the AS 2 provides the call value-added service, so that the UE 1 establishes a media channel to the AS that finally provides the call value-added service, and receives and presents the call value-added service.

In FIG. 6, the call method provided in this application is described by using the example in which the calling party of the first call signaling roams to the area outside the home area/registration area. Similarly, when a called party roams to an area outside a home area/registration area, refer to the method shown in FIG. 4. First call signaling to be sent to the called party is routed to an IMS network of the roaming area of the called party, and an AS in the roaming area of the called party (namely, an AS in the roaming area of the called party) provides a value-added-to-call service for the called party.

A processing procedure when a called party is in a roaming area is described below with reference to a flow diagram of an INVITE message shown in FIG. 7. It is assumed that a called party of first call signaling is UE 1, UE 3 calls the UE 1, a home area of the UE 1 is an area 1, and the UE 1 currently roams to an area 2. Indication information indicating that the called party of the first call signaling is roaming-in user equipment is named as a network identifier, and indication information indicating that an AS is to provide a value-added-to-call service for the called party is named as a service identifier. The message flow shown in FIG. 7 includes the following processes:
①: The UE 3 sends an INVITE message to an I-CSCF device/S-CSCF device in the home area of the UE 1, namely, the area 1.
②: The I-CSCF device/S-CSCF device in the area 1 receives the INVITE message, completes iFC trigger logic, and sends the INVITE message to an AS 3 that satisfies the iFC trigger condition in the area 1.
③: The AS that satisfies the iFC trigger condition in the area 1 receives the INVITE message, allocates a service identifier 3 when determining to provide the value-added-to-call service for the UE 1, and sends the service identifier 3 and the INVITE message to the I-CSCF device/S-CSCF device in the area 1.
④: The I-CSCF device/S-CSCF device in the area 1 receives the service identifier 3 and the INVITE message, and sends the service identifier 3 and the INVITE message to a P-CSCF device in the area 2.
⑤: The P-CSCF device in the area 2 receives the service identifier 3 and the INVITE message, determines, based on a "to" header field of the INVITE message, that the UE 1 is roaming-in user equipment, allocates a network identifier 2, and sends the network identifier 2, the service identifier 3, and the INVITE message to an I-CSCF device in the area 2.
⑥: The I-CSCF device in the area 2 sends the received network identifier 2, service identifier 3, and INVITE message to an S-CSCF device. The S-CSCF device in the area 2 completes iFC trigger logic and sends the network identifier 2, service identifier 3, and INVITE message to an AS 4 that satisfies the iFC trigger condition in the area 2.
⑦: The AS 4 in the area 2 receives the network identifier 2, the service identifier 3, and the INVITE message, and finally determines, according to the service identifier 3 and a service priority processing policy, whether the AS 3 or the AS 4 provides the call value-added service, so that the UE 1 establishes a media channel to the AS that finally provides the call value-added service, and receives and presents the call value-added service. In addition, the AS 4 sends the INVITE message to the I-CSCF device/S-CSCF device in the area 2.
⑧: The I-CSCF device/S-CSCF device in the area 2 receives the INVITE message and sends the INVITE message to the P-CSCF device in the area 2.
⑨: After receiving the INVITE message, the P-CSCF device in the area 2 sends the INVITE message to the UE 1, to complete a call connection.

With reference to the architecture shown in FIG. 3, the following describes a processing procedure in which an AS in the roaming area of a calling party provides a value-added-to-call service for the calling party. It is assumed that first call signaling is an INVITE message, the calling party is UE 1, a called party is UE 2, the UE 1 is in a roaming area, the UE 2 is in a home area, and an AS 1 in the roaming area of the UE 1 provides the value-added-to-call service for the UE 1.

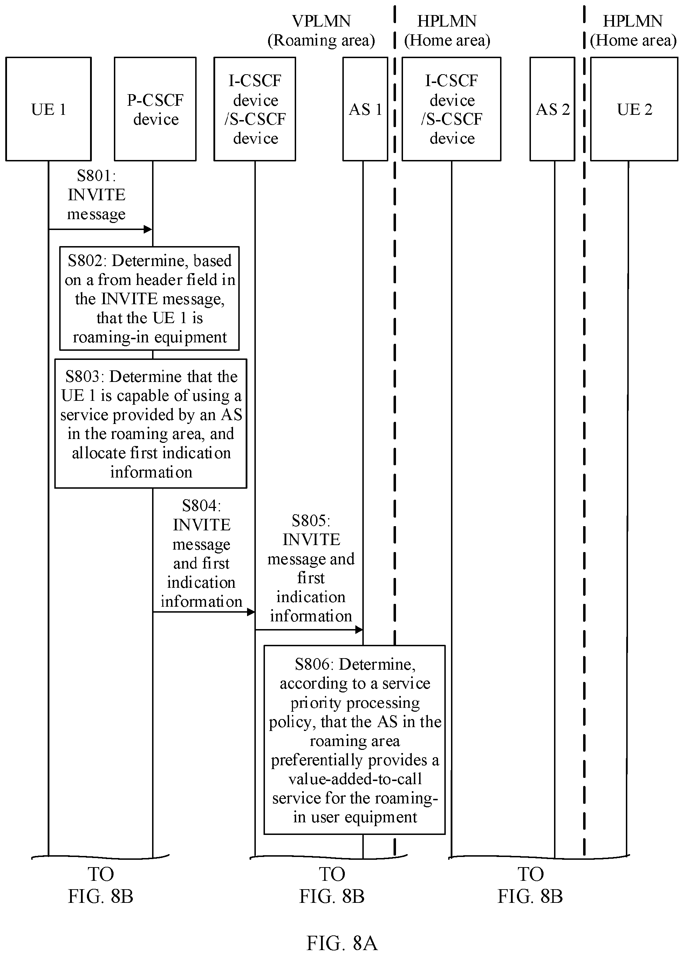

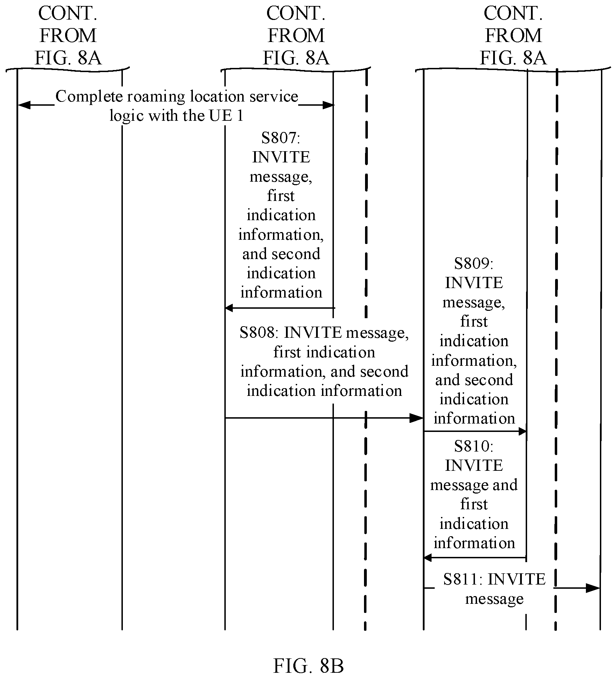

FIG. 8A and FIG. 8B are a flowchart of a call method according to an embodiment of this application. The method includes the following steps.

S801: The UE 1 sends, in the roaming area, the INVITE message to a P-CSCF device in the roaming area.

S802: The P-CSCF device determines, based on a "from" header field in the INVITE message, that the UE 1 is roaming-in user equipment.

For a process in which the P-CSCF device determines, based on the "from" header field in the INVITE message, that the UE 1 is roaming-in user equipment, refer to the descriptions in the embodiment corresponding to FIG. 4. Details are not described again.

S803: The P-CSCF device determines, according to a configuration policy and/or capability information of the UE 1, that the UE 1 is capable of using the value-added-to-call service provided by the AS in the roaming area, and allocates first indication information, where the first indication information indicates that the UE 1 is roaming-in user equipment.

For a specific process in which the P-CSCF device determines, according to the configuration policy and/or the capability information of the UE 1, that the UE 1 is capable of using the value-added-to-call service provided by the AS in the roaming area, refer to the descriptions in the embodiment corresponding to FIG. 4. Details are not described again.

S804: The P-CSCF device sends the INVITE message and the first indication information to an I-CSCF device/S-CSCF device in a home area of the P-CSCF device.

In S804, the INVITE message and the first indication information may be included in a same communication message and sent to the I-CSCF device/S-CSCF device in the home area of the P-CSCF device. For example, the INVITE message and the first indication information may be respectively carried in different header fields in the communication message and sent to the I-CSCF device/S-CSCF device in the home area of the P-CSCF device.

For example, the P-CSCF device may send the INVITE message and the first indication information to an I-CSCF device/S-CSCF device that has minimum load or whose load is less than a preset threshold in a plurality of I-CSCF devices/S-CSCF devices in the home area of the P-CSCF device. For a specific implementation process thereof, refer to the descriptions in the embodiment corresponding to FIG. 4. Details are not described again.

S805: The I-CSCF device/S-CSCF device receives the INVITE message and the first indication information, determines, based on the first indication information, that the INVITE message is an INVITE message initiated by the roaming-in user equipment, executes iFC trigger logic, and sends the INVITE message and the first indication information to the AS 1 that satisfies the iFC trigger logic in the home area of the P-CSCF device.

S806: The AS 1 receives the INVITE message and the first indication information, determines, based on the first indication information, that the INVITE message is an INVITE message initiated by the roaming-in user equipment, and determines, according to the service priority processing policy, that the AS in the roaming area preferentially provides the value-added-to-call service for the roaming-in user equipment, so that the AS 1 completes roaming area service logic with the UE 1.

Further, the following S807 to S811 are performed to complete a call connection. In the call connection process, an AS in the home area of the UE 1 may be triggered to provide the value-added-to-call service for the UE 1. To avoid a service conflict problem caused when the AS in the home area of the UE 1 and the AS in the roaming area of the UE 1 provide the value-added-to-call service for the UE 1 simultaneously, the AS 1 in the roaming area further needs to allocate second indication information and enable the second indication information to be routed to the AS in the home area of the UE 1 in the call connection process, where the second indication information may indicate that the AS 1 has provided the value-added-to-call service for the UE 1, so that the AS in the home area determines, based on the second indication information, that the AS 1 has provided the value-added-to-call service for the UE 1, and does not trigger a home location service processing procedure.

S807: The AS 1 allocates the second indication information, where the second indication information indicates that the AS 1 has provided the value-added-to-call service for the UE 1, and sends the INVITE message, the first indication information, and the second indication information to the I-CSCF device/S-CSCF device in the home area of the P-CSCF device.

S808: The I-CSCF device/S-CSCF device in the home area of the P-CSCF device receives the INVITE message, the first indication information, and the second indication information, and sends the INVITE message, the first indication information, and the second indication information to an I-CSCF device/S-CSCF device in a home area of the UE 1 based on the first indication information.

S809: The I-CSCF device/S-CSCF device in the home area of the UE 1 receives the INVITE message, the first indication information, and the second indication information, executes iFC trigger logic, and sends the INVITE message, the first indication information, and the second indication information to an AS 2 that satisfies the iFC trigger logic in the home area of the UE 1.

S810: The AS 2, as an AS in the home area, receives the INVITE message, the first indication information, and the second indication information, and determines, based on the second indication information, that the AS 1 has provided the value-added-to-call service for the UE 1, and does not trigger the home service processing procedure, and sends the INVITE message and the first indication information to the I-CSCF device/S-CSCF device in the home area of the UE 1.

S811: The I-CSCF device/S-CSCF device in the home area of UE 1 receives the INVITE message and the first indication information from the AS 2, and sends the INVITE message to an I-CSCF device/S-CSCF device in a home area of the UE 2 based on a "to" header field in the INVITE message, to complete the call connection.

The call connection process may include: The I-CSCF device/S-CSCF device in the home area of the UE 2 receives the INVITE message, executes iFC trigger logic, and sends the INVITE message to an AS that satisfies the iFC trigger logic in the home area of the UE 2.

The AS in the home area of the UE 2 receives the INVITE message, and completes home location service logic with the UE 2 when determining to provide the value-added-to-call service for the UE 2. For the process, refer to the conventional technology. Details are not described.

The AS in the home area of the UE 2 sends the INVITE message to the I-CSCF device/S-CSCF device in the home area of the UE 2, the I-CSCF device/S-CSCF device in the home area of the UE 2 receives the INVITE message and sends the INVITE message to a P-CSCF device in the home area of the UE 2, and the P-CSCF device in the home area of the UE 2 receives the INVITE message and sends the INVITE message to the UE 2.

Further, after receiving the INVITE message, the UE 2 returns, to the UE 1, a response message corresponding to the INVITE message. For example, the UE 2 may return, to the UE 1 based on a sending route of the INVITE message, the response message corresponding to the INVITE message.

Based on the method shown in FIG. 8A and FIG. 8B, after the UE 1 in the roaming area initiates the INVITE message, the P-CSCF device in the roaming area of the UE 1 may route, to an IMS network in the roaming area of the UE 1, the INVITE message initiated by the UE 1, and the AS in the roaming area of the UE 1 provides the value-added-to-call service for the UE 1. In addition, to avoid a service conflict caused when the AS in the roaming area and the AS in the home area of the UE 1 provide the value-added-to-call service for the UE 1 simultaneously, the second indication information allocated by the AS in the roaming area of the UE 1 is sent to the AS in the home area in the call connection process, so that the AS in the home area determines, based on the second indication information, that the AS 1 has provided the value-added-to-call service for the UE 1, and does not trigger the home service processing procedure.

FIG. 8A and FIG. 8B describe the call method provided in this application by using an example in which the AS in the roaming area preferentially provides the value-added-to-call service for the UE 1. In a possible design, in this embodiment of this application, the AS in the home area may alternatively preferentially provide the value-added-to-call service for the UE 1. With reference to the architecture shown in FIG. 3, the following describes a processing procedure in which an AS in the home area of a calling party provides a value-added-to-call service for the calling party. It is assumed that first call signaling is an INVITE message, the calling party is UE 1, a called party is UE 2, the UE 1 calls the UE 2, the UE 1 is in a roaming area, the UE 2 is in a home area, and an AS in the home area preferentially provides the value-added-to-call service for the UE 1.

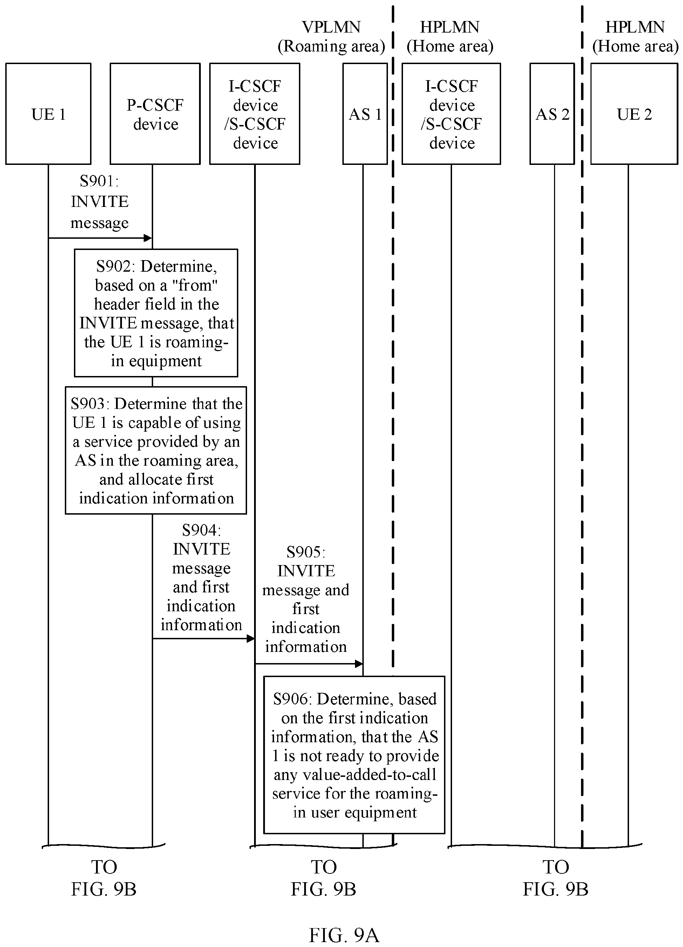

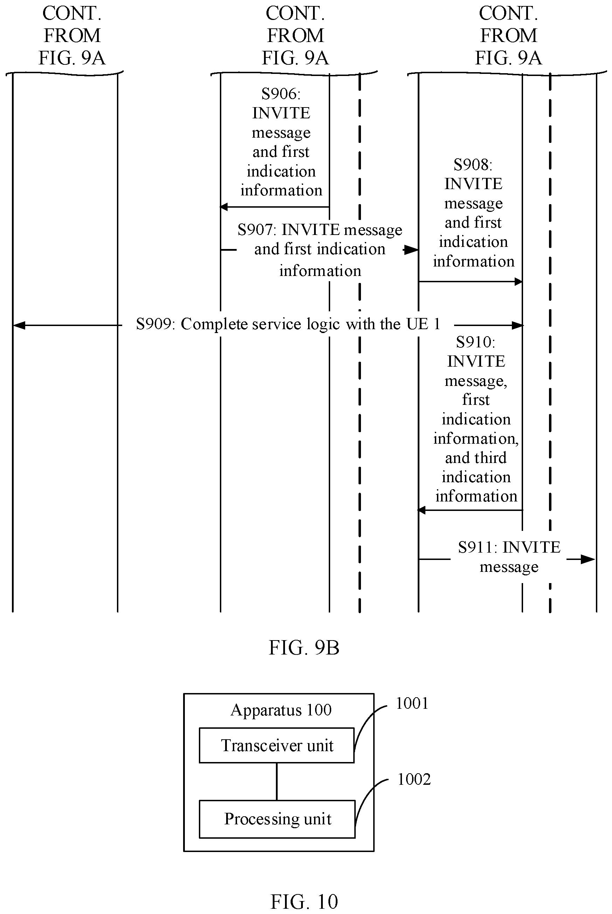

FIG. 9A and FIG. 9B are a flowchart of a call method according to an embodiment of this application. The method includes the following steps.

S901: The UE 1 sends, in the roaming area, the INVITE message to a P-CSCF device in the roaming area.

S902: The P-CSCF device determines, based on a "from" header field in the INVITE message, that the UE 1 is roaming-in user equipment.

For a process in which the P-CSCF device determines, based on the "from" header field in the INVITE message, that the UE 1 is roaming-in user equipment, refer to the descriptions in the embodiment corresponding to FIG. 4. Details are not described again.

S903: The P-CSCF device determines, according to a configuration policy and/or capability information of the UE 1, that the UE 1 is capable of using the value-added-to-call service provided by an AS in the roaming area, and allocates first indication information, where the first indication information identifies that the UE 1 is roaming-in user equipment.

For a specific process in which the P-CSCF device determines, according to the configuration policy and/or the capability information of the UE 1, that the UE 1 is capable of using the value-added-to-call service provided by the AS in the roaming area, refer to the descriptions in the embodiment corresponding to FIG. 4. Details are not described again.

S904: The P-CSCF device sends the INVITE message and the first indication information to an I-CSCF device/S-CSCF device in a home area of the P-CSCF device.

In S904, the INVITE message and the first indication information may be included in a same communication message and sent to the I-CSCF device/S-CSCF device in the home area of the P-CSCF device.

For example, the P-CSCF device may send the INVITE message and the first indication information to an I-CSCF device/S-CSCF device that has minimum load or whose load is less than a preset threshold in a plurality of I-CSCF devices/S-CSCF devices in the home area of the P-CSCF device. For a specific implementation process thereof, refer to the descriptions in the embodiment corresponding to FIG. 4. Details are not described again.

S905: The I-CSCF device/S-CSCF device receives the INVITE message and the first indication information, determines, based on the first indication information, that the INVITE message is an INVITE message initiated by the roaming-in user equipment, executes iFC trigger logic, and sends the INVITE message and the first indication information to an AS 1 that satisfies the iFC trigger logic in the home area of the P-CSCF device.

S906: The AS 1 receives the INVITE message and the first indication information, determines, based on the first indication information, that the AS 1 is not ready to provide any value-added-to-call service for the roaming-in user equipment, and sends the INVITE message and the first indication information to the I-CSCF device/S-CSCF device in the home area of the P-CSCF device.

S907: The I-CSCF device/S-CSCF device in the home area of the P-CSCF device receives the INVITE message and the first indication information, and sends the INVITE message and the first indication information to an I-CSCF device/S-CSCF device in a home area of the UE 1 based on the first indication information.

S908: The I-CSCF device/S-CSCF device in the home area of the UE 1 receives the INVITE message and the first indication information, executes iFC trigger logic, and sends the INVITE message and the first indication information to an AS 2 that satisfies the iFC trigger logic in the home area of the UE 1.

S909: The AS 2 receives the INVITE message and the first indication information, and determines, according to a service priority processing policy, that the AS in the home area 2 of the UE 1 preferentially provides the value-added-to-call service for the roaming-in user equipment UE 1. Further, the AS 2 completes home location service logic with the UE 1.

That the AS 2 completes home location service logic with the UE 1 may include: The AS in the home area 2 of the UE 1 may establish a media channel to the user equipment, provide a media stream corresponding to the value-added-to-call service to the user equipment through the media channel, and trigger the user equipment to provide the value-added-to-call service such as media content or game content on an APP interface related to a call service corresponding to the first call signaling. The AS in the home area 2 of the UE 1 may establish the media channel with the user equipment when the call service of the user equipment starts, is in progress, or ends. For the process, refer to the conventional technology. Details are not described.

It should be noted that, to avoid a service conflict problem caused when the AS in the roaming area of the UE 1 and the AS in the home area of the UE 1 simultaneously provide the value-added-to-call service for the UE 1 when the first call signaling or other call signaling related to the call service currently initiated by the UE 1 is routed to the AS 1 in the roaming area of the UE 1. The AS 2 sends the first indication information and third indication information that indicates that the AS 2 is to provide the value-added-to-call service for the UE 1 to the I-CSCF device/S-CSCF device in the home area of the UE 1, and the I-CSCF device/S-CSCF device in the home area of the UE 1 sends, to the AS in the roaming area of the UE 1 through an I-CSCF device/S-CSCF device in the roaming area of the UE 1 based on the first indication information, the first indication information and the third indication information that indicates that the AS 2 is to provide the value-added-to-call service for the UE 1, and the AS in the roaming area of the UE 1 determines a service priority, and after the AS in the roaming area of the UE 1 determines that the AS in the home area provides the call value-added service, and does not trigger a roaming location service processing procedure. Specifically, the process may include the following S910 and S911.

S910: The AS 2 sends the INVITE message, the first indication information, and the third indication information to the I-CSCF device/S-CSCF device in the home area of the UE 1.

The third indication information indicates that the AS 2 is to provide the value-added-to-call service for the UE 1.

S911: The I-CSCF device/S-CSCF device in the home area of the UE 1 receives the INVITE message, the first indication information, and the third indication information from the AS 2, and sends the INVITE message to an I-CSCF device/S-CSCF device in the home area of the UE 2 based on a "to" header field in the INVITE message, so as to complete a call connection.

The call connection process may include: The I-CSCF device/S-CSCF device in the home area of the UE 2 receives the INVITE message, executes iFC trigger logic, and sends the INVITE message to an AS that satisfies the iFC trigger logic in the home area of the UE 2.

The AS in the home area of the UE 2 receives the INVITE message, and completes home location service logic with the UE 2 when determining to provide the value-added-to-call service for the UE 2. For the process, refer to the conventional technology. Details are not described.

The AS in the home area of the UE 2 sends the INVITE message to the I-CSCF device/S-CSCF device in the home area of the UE 2. The I-CSCF device/S-CSCF device in the home area of the UE 2 receives the INVITE message, and sends the INVITE message to a P-CSCF device in the home area of UE 2. The P-CSCF device in the home area of the UE 2 receives the INVITE message, and sends the INVITE message to the UE 2.

Further, after receiving the INVITE message, the UE 2 returns, to the UE 1, a response message corresponding to the INVITE message. For example, the UE 2 may return, to the UE 1 based on a sending route of the INVITE message, the response message corresponding to the INVITE message.

For example, the UE 2 sends the response message corresponding to the INVITE message to the P-CSCF device in the home area of the UE 2, the P-CSCF device in the home area of the UE 2 sends the response message corresponding to the INVITE message to the I-CSCF device/S-CSCF device in the home area of the UE 2, and the I-CSCF device/S-CSCF device in the home area of the UE 2 sends the response message corresponding to the INVITE message to the I-CSCF device/S-CSCF device in the home area of the UE 1. The I-CSCF device/S-CSCF device in the home area of the UE 1 sends, based on the first indication information, the response message corresponding to the INVITE message, the first indication information, and the third indication information to the I-CSCF device/S-CSCF device in the roaming area of the UE 1. The I-CSCF device/S-CSCF device in the roaming area of the UE 1 receives the response message corresponding to the INVITE message, the first indication information, and the third indication information, returns the response message corresponding to the INVITE message to the roaming-in user equipment based on the first indication information, and sends the response message corresponding to the INVITE message, the first indication information, and the third indication information to the AS 1 in the roaming area of the UE 1. The AS 1 in the roaming area of the UE 1 determines, according to the service priority processing policy and the third indication information, that the AS in the home area preferentially provides the call value-added service, and does not trigger the roaming service processing procedure.

Based on the method shown in FIG. 9A and FIG. 9B, after the UE 1 in the roaming area initiates the INVITE message, the P-CSCF device in the roaming area may route, to an IMS network in the roaming area of the UE 1, the INVITE message initiated by the UE 1, and the AS in the roaming area determines whether to provide the value-added-to-call service for the UE 1. In addition, to avoid a service conflict caused when the AS in the roaming area and the AS in the home area provide the value-added-to-call service for the UE 1 simultaneously, the third indication information allocated by the AS in the home area is sent to the AS in the roaming area in the process of returning the response message corresponding to the INVITE message to the UE 1, so that after the AS in the roaming area determines, according to the third indication information and the service priority processing policy, that the AS in the home area preferentially provides the call value-added service, and does not trigger the roaming location service processing procedure.

The foregoing mainly describes the solutions provided in embodiments of this application from a perspective of interaction between the nodes. It can be understood that to implement the foregoing functions, each node such as the network element includes a corresponding hardware structure and/or software module for implementing each function. A person skilled in the art should be easily aware that algorithm steps in examples described with reference to embodiments disclosed in this specification can be implemented in a form of hardware, software, or a combination of hardware and computer software in the methods in embodiments of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the key management network element may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, and is merely logical function division. In an actual implementation, another division manner may be used.

FIG. 10 is a diagram of a structure of an apparatus 100. The apparatus 100 may be a first CSCF device, a chip or a system on chip in the first CSCF device, another apparatus that can implement a function of the first CSCF device in the foregoing method, or the like, and the apparatus 100 may be configured to perform the function of the first CSCF device in the foregoing method embodiments. In an implementation, the apparatus 100 shown in FIG. 10 includes a receiving unit 1001 and a processing unit 1002.

The receiving unit 1001 is configured to receive a first communication message, where the first communication message includes first call signaling, and an originating party or a terminating party of the first call signaling is roaming-in user equipment of the first CSCF device. For example, the receiving unit 1001 may be configured to support the apparatus 100 in performing S401, S802, and S902.

The processing unit 1002 is configured to route, based on the first communication message, the first call signaling to an AS in the roaming area of the roaming-in user equipment, where the AS in the roaming area is an AS that is capable of providing a value-added-to-call service for user equipment and that is in a home area of the first CSCF device. For example, the processing unit 1002 may be configured to support the apparatus 100 in performing S402, S802 to S804, and S902 to S904.

Specifically, all related content of the steps in the foregoing method embodiments shown in FIG. 4 to FIG. 9B may be cited in function descriptions of the corresponding functional modules. Details are not described herein again. The apparatus 100 is configured to perform the function of the first CSCF device in the call methods shown in FIG. 4 to FIG. 9B, and therefore can achieve an effect the same as that achieved by the foregoing call methods.

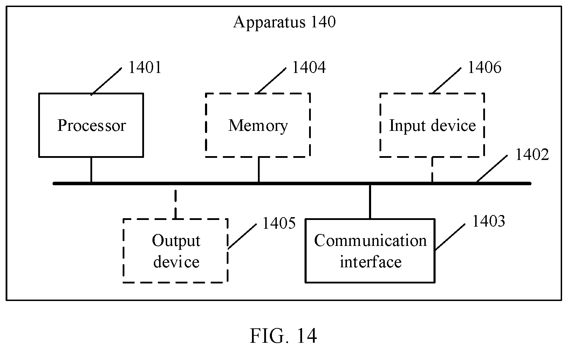

In this embodiment, the apparatus 100 may alternatively presented in a form of functional modules obtained through division in an integrated manner. The "functional module" herein may be an application-specific integrated circuit (application-specific integrated circuit, ASIC), a circuit, a processor and a memory that execute one or more software or firmware programs, an integrated logic circuit, and/or another component that can provide the foregoing functions. In a simple embodiment, a person skilled in the art may figure out that a function/an implementation process of the processing unit 1002 in the apparatus 100 may be implemented by a processor by invoking computer-executable instructions stored in a memory. A function/an implementation process of the transceiver unit 1001 in FIG. 10 may be implemented by using a communication interface. For example, in another implementation, the apparatus 100 may use a composition structure shown in FIG. 14.

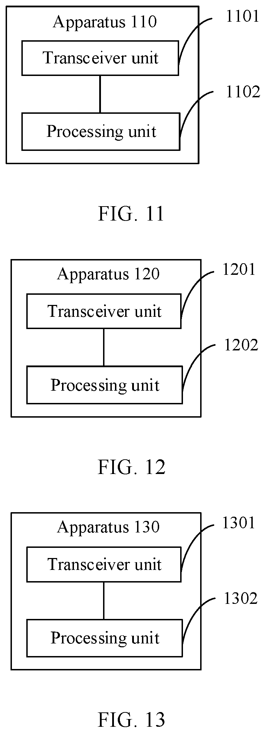

FIG. 11 is a diagram of a structure of an apparatus 110. The apparatus 110 may be a second CSCF device, a chip or a system on chip in the second CSCF device, another apparatus that can implement a function of the second CSCF device in the foregoing method, or the like, and the apparatus 110 may be configured to perform the function of the second CSCF device in the foregoing method embodiments. In an implementation, the apparatus 110 shown in FIG. 11 includes a receiving unit 1101 and a processing unit 1102.

The receiving unit 110 is configured to receive a second communication message from a first CSCF device, where the second communication message includes first call signaling, and an originating party or a terminating party of the first call signaling is roaming-in user equipment of the first CSCF device. For example, the receiving unit 1001 is configured to support the apparatus 110 in performing S402(c), S805, and S905.

The processing unit 1102 is configured to route, based on the second communication message, the first call signaling to an AS in the roaming area of the roaming-in user equipment, where the AS in the roaming area is an AS that is capable of providing a value-added-to-call service for user equipment and that is in a home area of the first CSCF device. For example, the processing unit 1102 is configured to support the apparatus 110 in performing S402(c), S805, and S905.

Specifically, all related content of the steps in the foregoing method embodiments shown in FIG. 4 to FIG. 9B may be cited in function descriptions of the corresponding functional modules. Details are not described herein again. The apparatus 110 is configured to perform the function of the second CSCF device in the call methods shown in FIG. 4 to FIG. 9B, and therefore can achieve an effect the same as that achieved by the foregoing call methods.

In this embodiment, the apparatus 110 may alternatively presented in a form of functional modules obtained through division in an integrated manner. The "functional module" herein may be an application-specific integrated circuit (application-specific integrated circuit, ASIC), a circuit, a processor and a memory that execute one or more software or firmware programs, an integrated logic circuit, and/or another component that can provide the foregoing functions. In a simple embodiment, a person skilled in the art may figure out that a function/an implementation process of the processing unit 1102 in the apparatus 110 may be implemented by a processor by invoking computer-executable instructions stored in a memory. A function/an implementation process of the transceiver unit 1101 in FIG. 11 may be implemented by using a communication interface. For example, in another implementation, the apparatus 110 may use the composition structure shown in FIG. 14.

FIG. 12 is a diagram of a structure of an apparatus 120. The apparatus 120 may be an AS in the roaming area, a chip or a system on chip in the AS in the roaming area, another apparatus that can implement a function of the AS in the roaming area in the foregoing method, or the like. The apparatus 120 may be configured to perform the function of the AS in the roaming area in the foregoing method embodiments. In an implementation, the apparatus 120 shown in FIG. 12 includes a receiving unit 1201 and a processing unit 1202.

The receiving unit 1201 is configured to receive a second communication message from a first call session control function CSCF device or a second CSCF device, where the second communication message includes first call signaling, and an originating party or a terminating party of the first call signaling is roaming-in user equipment of the first CSCF device or the second CSCF device. For example, the receiving unit 1201 may support the apparatus 120 in performing S403 and S806.

The processing unit 1202 is configured to provide a value-added-to-call service for the roaming-in user equipment based on the second communication message. For example, the processing unit 1202 may support the apparatus 120 in performing S403 and S806.

Specifically, all related content of the steps in the foregoing method embodiments shown in FIG. 4 to FIG. 9B may be cited in function descriptions of the corresponding functional modules. Details are not described herein again. The apparatus 120 is configured to perform the function of the AS in the roaming area in the call methods shown in FIG. 4 to FIG. 9B, and therefore can achieve an effect the same as that achieved by the foregoing call methods.

In this embodiment, the apparatus 120 may alternatively presented in a form of functional modules obtained through division in an integrated manner. The "functional module" herein may be an application-specific integrated circuit (application-specific integrated circuit, ASIC), a circuit, a processor and a memory that execute one or more software or firmware programs, an integrated logic circuit, and/or another component that can provide the foregoing functions. In a simple embodiment, a person skilled in the art may figure out that a function/an implementation process of the processing unit 1202 in the apparatus 120 may be implemented by a processor by invoking computer-executable instructions stored in a memory. A function/an implementation process of the transceiver unit 1201 in FIG. 12 may be implemented by using a communication interface. For example, in another implementation, the apparatus 120 may use the composition structure shown in FIG. 14.

FIG. 13 is a diagram of a structure of an apparatus 130. The apparatus 130 may be an AS in the home area, a chip or a system on chip in the AS in the home area, another apparatus that can implement a function of the AS in the home area in the foregoing method, or the like. The apparatus 130 may be configured to perform the function of the AS in the home area in the foregoing method embodiments. In an implementation, the apparatus 130 shown in FIG. 13 includes a receiving unit 1301 and a processing unit 1302.

The receiving unit 1301 is configured to receive a seventh communication message from a third call session control function CSCF device, where the seventh communication message includes first call signaling, and an originating party or a terminating party of the first call signaling is home user equipment of the third CSCF device. For example, the receiving unit 1301 is configured to support the apparatus 130 in performing S506, S810, and S910.

The processing unit 1302 is configured to route, based on the seventh communication message, the first call signaling or second call signaling of a call service corresponding to the first call signaling to a first AS, where the first AS is an AS in a roaming area of the home user equipment. For example, the processing unit 1302 is configured to support the apparatus 130 in performing S506, S810, and S910.

Specifically, all related content of the steps in the foregoing method embodiments shown in FIG. 4 to FIG. 9B may be cited in function descriptions of the corresponding functional modules. Details are not described herein again. The apparatus 130 is configured to perform the function of the AS in the home area in the call methods shown in FIG. 4 to FIG. 9B, and therefore can achieve an effect the same as that achieved by the foregoing call methods.

In this embodiment, the apparatus 130 may alternatively presented in a form of functional modules obtained through division in an integrated manner. The "functional module" herein may be an application-specific integrated circuit (application-specific integrated circuit, ASIC), a circuit, a processor and a memory that execute one or more software or firmware programs, an integrated logic circuit, and/or another component that can provide the foregoing functions. In a simple embodiment, a person skilled in the art may figure out that a function/an implementation process of the processing unit 1302 in the apparatus 130 may be implemented by a processor by invoking computer-executable instructions stored in a memory. A function/an implementation process of the transceiver unit 1301 in FIG. 13 may be implemented by using a communication interface. For example, in another implementation, the apparatus 130 may use the composition structure shown in FIG. 14.

In another implementation, the first CSCF device, the second CSCF device, the AS in the roaming area, and the AS in the home area may use the composition structure shown in FIG. 14, or include components shown in FIG. 14. FIG. 14 is a schematic composition diagram of an apparatus 140 according to an embodiment of this application. The apparatus 140 may be a first CSCF device, a second CSCF device, an AS in the roaming area, or an AS in the home area; or a chip or a system on chip in the first CSCF device, the second CSCF device, the AS in the roaming area, or the AS in the home area, or another apparatus that can implement a function of the first CSCF device, the second CSCF device, the AS in the roaming area, the AS in the home area in the foregoing method, or the like. As shown in FIG. 14, the apparatus 140 may include a processor 1401, a communication line 1402, and a communication interface 1403. Further, the communication apparatus 140 may further include a memory 1404. The processor 1401, the memory 1404, and the communication interface 1403 may be connected through the communication line 1402. The processor 1401 may integrate functions of the processing unit 1002, the processing unit 1102, the processing unit 1202, and the processing unit 1302. The communication interface 1403 may integrate functions of the receiving unit 1001, the receiving unit 1101, the receiving unit 1201, and the receiving unit 1301.

The processor 1401 may be a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor 1401 may alternatively be another apparatus having a processing function, for example, a circuit, a component, or a software module. This is not limited.

The communication line 1402 is configured to transmit information between the components included in the apparatus 140.

The communication interface 1403 is configured to communicate with another device or another communication network (for example, the Ethernet, a radio access network (radio access network, RAN), a wireless local area network (wireless local area network, WLAN)), or the like. The communication interface 1403 may be a module, a circuit, a transceiver, a network interface, or any apparatus that can implement communication.

The memory 1404 is configured to store instructions. The instructions may be a computer program.

The memory 1404 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital universal optical disc, and a Blu-ray optical disc), a magnetic disk storage medium, or another magnetic storage device. This is not limited.

It should be noted that the memory 1404 may exist independently of the processor 1401, or may be integrated with the processor 1401. The memory 1404 may be configured to store instructions, program code, some data, or the like. The memory 1404 may be located inside the apparatus 140, or may be located outside the apparatus 140. This is not limited.

The processor 1401 is configured to execute the instructions stored in the memory 1404, to implement the call method provided in the foregoing embodiments of this application. In an example, the processor 1401 may include one or more CPUs. In an optional implementation, the apparatus 140 includes a plurality of processors.

In an optional implementation, the apparatus 140 may further include an output device 1405 and an input device 1406. For example, the input device 1406 is a device, for example, a keyboard, a mouse, a microphone, or a joystick, and the output device 1405 is a device, for example, a display or a speaker (speaker).

It should be noted that the apparatus 140 may be a desktop computer, a portable computer, a network server, a mobile phone, a tablet computer, a wireless terminal, an embedded device, a chip system, or a device having a structure similar to that in FIG. 14. In addition, the composition structure shown in FIG. 14 does not constitute a limitation on the communication apparatus. In addition to the components shown in FIG. 14, the communication apparatus may include more or fewer components than those shown in the figure, or some components may be combined, or have different component arrangements.

In embodiments of this application, the chip system may include a chip; or may include a chip and another discrete component.

An embodiment of this application further provides a computer-readable storage medium. All or some of the procedures in the foregoing method embodiments may be completed by a computer program instructing related hardware. The program may be stored in the foregoing computer-readable storage medium. When the program is executed, the procedures of the foregoing method embodiments may be performed. The computer-readable storage medium may be an internal storage unit of the terminal apparatus according to any one of the foregoing embodiments, for example, including a data transmitting end and/or a data receiving end. For example, the computer-readable storage medium may be a hard disk or a memory of the terminal apparatus. Alternatively, the computer-readable storage medium may be an external storage device of the terminal apparatus, for example, a plug-in hard disk, a smart media card (smart media card, SMC), a secure digital (secure digital, SD) card, or a flash card (flash card) that is configured on the terminal apparatus. Further, the computer-readable storage medium may include both an internal storage unit and an external storage device of the terminal apparatus. The computer-readable storage medium is configured to store the computer program and other programs and data that are required by the terminal apparatus. The computer-readable storage medium may be further configured to temporarily store data that has been output or is to be output.

An embodiment of this application further provides computer instructions. All or some of the procedures in the foregoing method embodiments may be implemented by the computer instructions instructing related hardware (such as a computer, a processor, a network device, and a terminal). A program may be stored in the foregoing computer-readable storage medium.

It should be understood that in embodiments of this application, "B corresponding to A" indicates that B is associated with A. For example, B may be determined based on A. It should be further understood that determining B based on A does not mean that B is determined based only on A. B may alternatively be determined based on A and/or other information. In addition, in embodiments of this application, "connection" means various connection manners such as a direct connection or an indirect connection, for implementing communication between devices. This is not limited in embodiments of this application.

In the descriptions of this application, "/" represents an "or" relationship between associated objects unless otherwise specified. For example, A/B may represent A or B. A term "and/or" in this application represents only an association relationship between associated objects and represents that three relationships may exist. For example, A and/or B may represent the following three cases: Only A exists, both A and B exist, and only B exists, where A and B may be singular or plural. In addition, in the descriptions of this application, "a plurality of" means two or more, unless otherwise specified. At least one of the following items (pieces) or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the word such as "example" or "for example" is used to represent giving an example, an illustration, or a description. Any embodiment or design scheme described as an "example" or with "for example" in embodiments of this application should not be explained as being more preferred or having more advantages than another embodiment or design scheme. Exactly, use of the word such as "example" or "for example" is intended to present a relative concept in a specific manner for ease of understanding.

The foregoing descriptions about implementations allow a person skilled in the art to understand that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate. Parts displayed as units may be one or more physical units, to be specific, may be located in one place, or may be distributed at a plurality of different places. Some or all of the units may be selected based on actual requirements to achieve the objectives of the solutions in embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the current technology, or all or some of the technical solutions may be implemented in a form of a software product. The software product is stored in a storage medium and includes several instructions for instructing a device, where for example, the device may be a single-chip microcomputer or a chip, or a processor (processor) to perform all or some of the steps of the methods in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A call method, performed by a first call session control function CSCF device, wherein the method comprises:
receiving a first communication message, wherein the first communication message comprises first call signaling, and an originating party or a terminating party of the first call signaling is roaming-in user equipment of the first CSCF device; and
enabling, based on the first communication message, the first call signaling to be routed to an application server AS in a roaming area of the roaming-in user equipment, wherein the AS in the roaming area is an AS that is capable of providing a value-added-to-call service for user equipment and that is in a home area of the first CSCF device.

2. The method according to claim 1, wherein the enabling, based on the first communication message, the first call signaling to be routed to an application server AS in a roaming area of the roaming-in user equipment comprises:
determining, based on the first communication message, that the originating party or the terminating party of the first call signaling is roaming-in user equipment of the first CSCF device; and
enabling the first call signaling to be routed to the AS in the roaming area.

3. The method according to claim 2, wherein the enabling the first call signaling to be routed to the AS in the roaming area comprises:
sending a second communication message to a second CSCF device in the home area of the first CSCF device or the AS in the roaming area, wherein the second communication message comprises the first call signaling and first indication information, wherein the first indication information indicates that the originating party or the terminating party of the first call signaling is roaming-in user equipment of the first CSCF device.

4. The method according to claim 3, wherein the first indication information further indicates the first call signaling or second call signaling of a call service corresponding to the first call signaling to be routed to an AS in the roaming area of the roaming-in user equipment.

5. The method according to claim 3 or 4, wherein the method further comprises:
storing a correspondence between the first indication information and the call service corresponding to the first call signaling or a correspondence between the first indication information and a communication session corresponding to the first call signaling.

6. The method according to any one of claims 3 to 5, wherein the second communication message further comprises address information of the second CSCF device, to enable the second communication message to be routed to the second CSCF device.

7. The method according to any one of claims 2 to 6, wherein the determining, based on the first communication message, that the originating party or the terminating party of the first call signaling is roaming-in user equipment of the first CSCF device comprises:
determining, based on a "from" header field or an P-Asserted-Identity header field in the first communication message, that the originating party of the first call signaling is roaming-in user equipment of the first CSCF device; or
determining, based on a "to" header field in the first communication message, that the terminating party of the first call signaling is a roaming-in user equipment of the first CSCF device.

8. The method according to any one of claims 1 to 7, wherein the method further comprises:
receiving a third communication message sent by the AS in the roaming area, wherein the third communication message comprises the first call signaling, the first indication information, and second indication information, wherein the second indication information indicates that the AS in the roaming area is to provide a value-added-to-call service for the roaming-in user equipment, or wherein the second indication information indicates that the AS in the roaming area has provided a value-added-to-call service for the roaming-in user equipment; and
sending a fourth communication message to a third CSCF device in a home area of the roaming-in user equipment, wherein the fourth communication message comprises the first call signaling, the first indication information and the second indication information.

9. The method according to claim 8, wherein the method further comprises:
receiving a fifth communication message from the third CSCF device, wherein the fifth communication message comprises the first indication information and third indication information, wherein the third indication information indicates that an AS in the home area of the roaming-in user equipment is to provide a value-added-to-call service for the roaming-in user equipment; and
sending a sixth communication message to the AS in the roaming area based on the first indication information, wherein the sixth message comprises the first indication information and the third indication information.

10. The method according to claim 8, wherein the method further comprises:
receiving a fifth communication message from the third CSCF device, wherein the fifth communication message comprises the first indication information and the second indication information; and
sending a sixth communication message to the AS in the roaming area based on the first indication information, wherein the sixth message comprises the first indication information and the second indication information.

11. The method according to any one of claims 1 to 10, wherein before the enabling, based on the first communication message, the first call signaling to be routed to an AS in the roaming area, the method further comprises:
determining that the roaming-in user equipment is capable of using the value-added-to-call service provided by the AS in the home area of the first CSCF device.

12. The method according to any one of claims 3 to 11, wherein the second CSCF device in the home area of the first CSCF device is an interrogating-call session control function I-CSCF device or a serving-call session control function S-CSCF device in the home area of the first CSCF device.

13. The method according to any one of claims 1 to 12, wherein the first CSCF device is a proxy-call session control function P-CSCF device.

14. A call method, performed by a second call session control function CSCF device, wherein the method comprises:
receiving a second communication message from a first call session control function CSCF device, wherein the second communication message comprises first call signaling, wherein an originating party or a terminating party of the first call signaling is roaming-in user equipment of the first CSCF device; and
enabling, based on the second communication message, the first call signaling to be routed to an application server AS in a roaming area of the roaming-in user equipment, wherein the AS in the roaming area is an AS that is capable of providing a value-added-to-call service for user equipment and that is in a home area of the first CSCF device.

15. The method according to claim 14, wherein the second communication message further comprises first indication information, wherein the first indication information indicates that the originating party or the terminating party of the first call signaling is roaming-in user equipment of the first CSCF device; and the enabling, based on the second communication message, the first call signaling to be routed to an application server AS in a roaming area of the roaming-in user equipment comprises:
sending the second communication message to the AS in the roaming area based on the first indication information.

16. The method according to claim 15, wherein the first indication information further indicates the first call signaling or second call signaling of a call service corresponding to the first call signaling to be routed to the AS in the roaming area of the roaming-in user equipment.

17. The method according to claim 15 or 16, wherein the method further comprises:
storing a correspondence between the first indication information and the call service corresponding to the first call signaling or a correspondence between the first indication information and a communication session corresponding to the first call signaling.

18. The method according to any one of claims 15 to 17, wherein
the second communication message further comprises address information of a second CSCF device, to enable the second communication message to be routed to the second CSCF device.

19. The method according to any one of claims 14 to 18, wherein the method further comprises:
receiving a third communication message sent by the AS in the roaming area, wherein the third communication message comprises the first call signaling, the first indication information, and second indication information, wherein the second indication information indicates that the AS in the roaming area is to provide a value-added-to-call service for the roaming-in user equipment, or wherein the second indication information indicates that the AS in the roaming area has provided the value-added-to-call service for the roaming-in user equipment; and
sending a fourth communication message to a third CSCF device in a home area of the roaming-in user equipment, wherein the fourth communication message comprises the first call signaling, the first indication information, and the second indication information.

20. The method according to claim 19, wherein the method further comprises:
receiving a fifth communication message from the third CSCF device, wherein the fifth communication message comprises the first indication information and third indication information, and the third indication information indicates that an AS in the home area of the roaming-in user equipment is to provide the value-added-to-call service for the roaming-in user equipment; and
sending a sixth communication message to the AS in the roaming area based on the first indication information, wherein the sixth message comprises the first indication information and the third indication information.

21. The method according to claim 19, wherein the method further comprises:
receiving a fifth communication message from the third CSCF device, wherein the fifth communication message comprises the first indication information and the second indication information; and
sending a sixth communication message to the AS in the roaming area based on the first indication information, wherein the sixth message comprises the first indication information and the second indication information.

22. The method according to any one of claims 14 to 21, wherein the second CSCF device is an interrogating-call session control function I-CSCF device in the home area of the first CSCF device or a serving-call session control function S-CSCF device in a home area of the second CSCF device.

23. A call method, performed by a first application server AS, wherein the method comprises:
receiving a second communication message from a first call session control function CSCF device or a second CSCF device, wherein the second communication message comprises first call signaling, and an originating party or a terminating party of the first call signaling is roaming-in user equipment of the first CSCF device or the second CSCF device; and
providing a value-added-to-call service for the roaming-in user equipment based on the second communication message.

24. The method according to claim 23, wherein the second communication message further comprises first indication information, and the first indication information indicates that the originating party or the terminating party of the first call signaling is roaming-in user equipment of the first CSCF device.

25. The method according to claim 24, wherein the first indication information further indicates the first call signaling or second call signaling of a call service corresponding to the first call signaling to be routed to the first AS.

26. The method according to claim 24 or 25, wherein the method further comprises:
storing a correspondence between the first indication information and the call service corresponding to the first call signaling or a correspondence between the first indication information and a communication session corresponding to the first call signaling.

27. The method according to any one of claims 23 to 26, wherein the providing a value-added-to-call service for the roaming-in user equipment based on the second communication message comprises:
in response to the second communication message, providing the value-added-to-call service for the roaming-in user equipment; and
sending a third communication message to the second CSCF device, wherein the third communication message comprises the first call signaling, the first indication information, and second indication information, wherein the second indication information indicates that the first AS has provided the value-added-to-call service for the roaming-in user equipment.

28. The method according to any one of claims 23 to 26, wherein the providing a value-added-to-call service for the roaming-in user equipment based on the second communication message comprises:
sending a third communication message to the second CSCF device in response to the second communication message, wherein the third communication message comprises the first call signaling, the first indication information, and second indication information, wherein the second indication information indicates that the first AS is to provide the value-added-to-call service for the roaming-in user equipment;
receiving a sixth communication message from the second CSCF device, wherein the sixth communication message comprises the first call signaling, the first indication information, and third indication information, and the third indication information indicates that an AS in the home area of the roaming-in user equipment is to provide the value-added-to-call service for the roaming-in user equipment; and
providing the value-added-to-call service for the roaming-in user equipment in response to the sixth communication message.

29. A call method, performed by a second application server AS, wherein the method comprises:
receiving a seventh communication message from a third call session control function CSCF device, wherein the seventh communication message comprises first call signaling, and an originating party or a terminating party of the first call signaling is home user equipment of the third CSCF device; and
enabling, based on the seventh communication message, the first call signaling or second call signaling of a call service corresponding to the first call signaling to be routed to a first AS, wherein the first AS is an AS in a roaming area of the home user equipment.

30. The method according to claim 29, wherein the seventh communication message further comprises first indication information, the first indication information indicates that the originating party or the terminating party of the first call signaling is roaming-in user equipment of a first CSCF device, and the first CSCF device is a CSCF device in the roaming area of the home user equipment.

31. The method according to claim 30, wherein the first indication information further indicates the first call signaling or second call signaling of a call service corresponding to the first call signaling to be routed to the AS in the roaming area of the home user equipment.

32. The method according to claim 30 or 31, wherein the method further comprises:
storing a correspondence between the first indication information and the call service corresponding to the first call signaling or a correspondence between the first indication information and a communication session corresponding to the first call signaling.

33. The method according to any one of claims 29 to 31, wherein the enabling, based on the seventh communication message, the first call signaling or second call signaling of a call service corresponding to the first call signaling to be routed to a first AS comprises:
sending an eighth communication message to the third CSCF device in response to the seventh communication message, wherein the eighth communication message comprises the first call signaling, the first indication information, and third indication information, and the third indication information indicates that the second AS is to provide the value-added-to-call service for the roaming-in user equipment.

34. The method according to any one of claims 29 to 31, wherein the enabling, based on the seventh communication message, the first call signaling or second call signaling of a call service corresponding to the first call signaling to be routed to a first AS comprises:
sending an eighth communication message to the third CSCF device in response to the seventh communication message, wherein the eighth communication message comprises the first call signaling and the first indication information.
